(19) Europäisches Patentamt
European Patent Office
Office européen des brevets

(11) **EP 1 185 125 B1**

(12) **EUROPEAN PATENT SPECIFICATION**

(45) Date of publication and mention
of the grant of the patent:
**20.01.2010 Bulletin 2010/03**

(51) Int Cl.:
***H04W 4/06*** (2009.01)     ***H04L 12/18*** (2006.01)

(21) Application number: **01919911.6**

(86) International application number:
**PCT/JP2001/003163**

(22) Date of filing: **12.04.2001**

(87) International publication number:
**WO 2001/080590 (25.10.2001 Gazette 2001/43)**

(54) **MULTICAST SERVICE PROVIDING SYSTEM, MULTICAST SERVICE PROVIDING METHOD, INFORMATION DISTRIBUTOR AND RADIO TERMINAL**

SYSTEM UND VERFAHREN ZUR BEREITSTELLUNG EINES MEHRFACHSENDEDIENSTES, INFORMATIONSVERTEILER UND FUNKENDGERÄT

SYSTEME ET PROCEDE DE PRESTATION DE SERVICES MULTIDIFFUSION, DISTRIBUTEUR D'INFORMATIONS ET TERMINAL RADIO

(84) Designated Contracting States:
**DE GB IT**

(30) Priority: **14.04.2000 JP 2000114073**
**20.04.2000 JP 2000119537**
**30.11.2000 JP 2000366015**

(43) Date of publication of application:
**06.03.2002 Bulletin 2002/10**

(73) Proprietor: **NTT DoCoMo, Inc.**
**Tokyo 100-6150 (JP)**

(72) Inventors:
• **SATO, Hijin**
**Yokohama-shi, Kanagawa 234-0054 (JP)**
• **SHIMADA, Kobaruto**
**Yokosuka-shi, Kanagawa 238-0012 (JP)**

• **TAKAO, Toshiaki**
**Yokohama-shi, Kanagawa 236-0042 (JP)**
• **UMEDA, Narumi**
**Yokohama-shi, Kanagawa 236-0032 (JP)**

(74) Representative: **Vinsome, Rex Martin et al**
**Urquhart-Dykes & Lord LLP**
**12th Floor, Cale Cross House**
**Pilgrim Street 156**
**Newcastle-upon-Tyne NE1 6SU (GB)**

(56) References cited:
**EP-A- 0 951 198**     **JP-A- 11 032 370**
**JP-A- 2000 032 007**     **JP-A- 2000 175 263**

• **FENNER W: "Internet Group Management Protocol, Version 2" IETF REQUEST FOR COMMENTS, XX, XX, no. RFC 2236, 1 November 1997 (1997-11-01), pages 1-24, XP002193942**

**Description**

<u>TECHNICAL FIELD</u>

The present invention relates to a multicast service providing method and system, and, in particular, a multicast service providing method and system by which, to radio terminals present in a service area, multicast information (multicast data) distribution service is performed via a radio section.

Furthermore, the present invention relates to an information distributing apparatus, a radio terminal and a radio base station applied to the above-mentioned multicast service providing system.

<u>BACKGROUND ART</u>

An IGMP (Internet Group Management Protocol) is known as a multicast communication protocol realizable in an IP network. The IGMP is a protocol for determining whether or not a router sends out multicast information to a sub-network, for the purpose of avoiding congestion of a network. An access communication system connected to the network which supports the IGMP should employ a control procedure which has an affinity with the IGMP.

In a communication system according to the IGMP, while the router distributes (broadcasts) multicast information to each host in the sub-network, the router broadcasts query periodically. The host which received the query monitors as to whether a response from another host is received within a random time. When a response from another host is received by the host, this host maintains a reception condition for multicast information. However, no response from another host is received by the host, this host transmits a response (report) to the router and the other host so as to continue reception of multicast information. Then, when the router receives a response (report) from any host in response to the periodically broadcast query, the router continues distribution (broadcast) of the multicast information to each host.

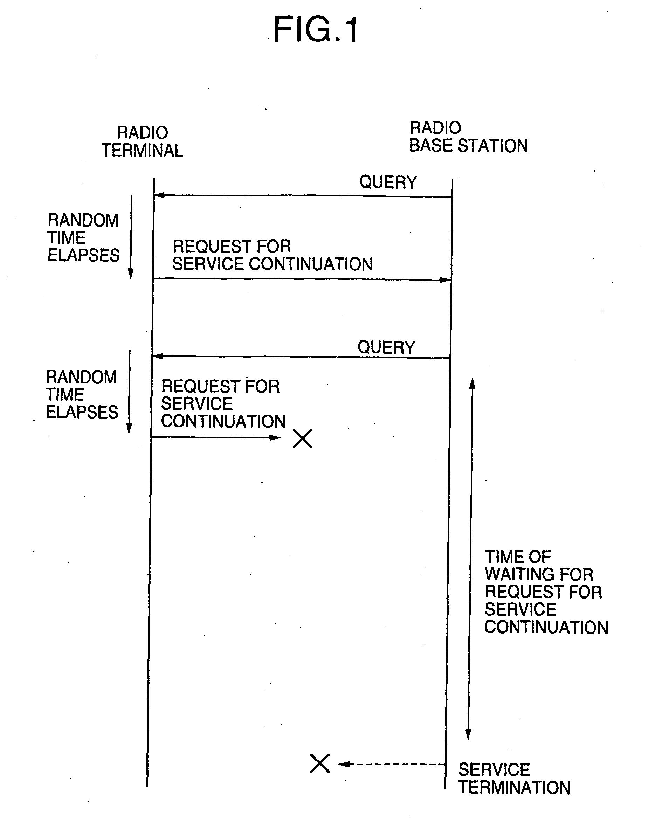

Such a processing procedure may be applied to a radio section as it is. In this case, as shown in FIG. 1, a message corresponding to the above-mentioned query is transmitted to all the radio terminals present in a service area by a radio base station. The radio terminal which has received the message transmits a request for the service continuation as a response thereto to the radio base station after a random time has elapsed, when desiring continuation of multicast information distribution service. When receiving a response to the above-mentioned query from any radio terminal, the radio base station continues the multicast information distribution service.

Thus, in case the processing procedure of IGMP is applied to the radio section, when receiving the message corresponding to the query from the radio base station, the radio terminal can transmit a response thereto to the radio base station. However, it is not possible to transmit another radio terminal in case of IP network. If the above-mentioned response transmitted from the radio terminal could not be received by all the other radio terminals which receive multicast information in the same service area, the response would be returned to the radio base station from all the radio terminals which desire continuation of receiving the multicast information. Thereby, congestion is likely to occur in the radio section.

Further, an access to a channel transmitting the above-mentioned request for service continuation occurs randomly from a plurality of radio terminals. However, in case the permissible number of the accesses is limited for this channel, collision occurs when many radio terminals simultaneously transmit the requests for service continuation by chance. Thereby, as shown in FIG. 1, the request for service continuation does not reach the radio base station (see a sign ×). When the radio base station operates in accordance with a protocol such as IGMP, the radio station terminates multicast information distribution service after a predetermined time has elapsed without transmission of a request for service continuation made from any radio terminal after transmitting the query. Thereby, the service would be interrupted even though there are the radio terminals which request service of distributing multicast information in the service area if the request for service continuation made from the many radio terminals simultaneously by chance collided as mentioned above.

Further, recently, verification for a multicast application performing broadcast-like distribution of music or movies via the Internet employing a cable network, or performing cooperative works or remote meeting by a plurality of users has been performed by using IGMP performing group management of various multicast service.

On the other hand, through spread of portable telephone terminals such as cellular phones, PHS terminals, or the like, or portable information terminals such as socalled notebook personal computers, it is expected that a demand of radio provision of multicast service increases. When an PC terminal of an end user of a network and a router of a sub-network in which this PC terminal exists can operate in accordance with IGMP, provision of multicast service can be made whether the channel is of cable or radio.

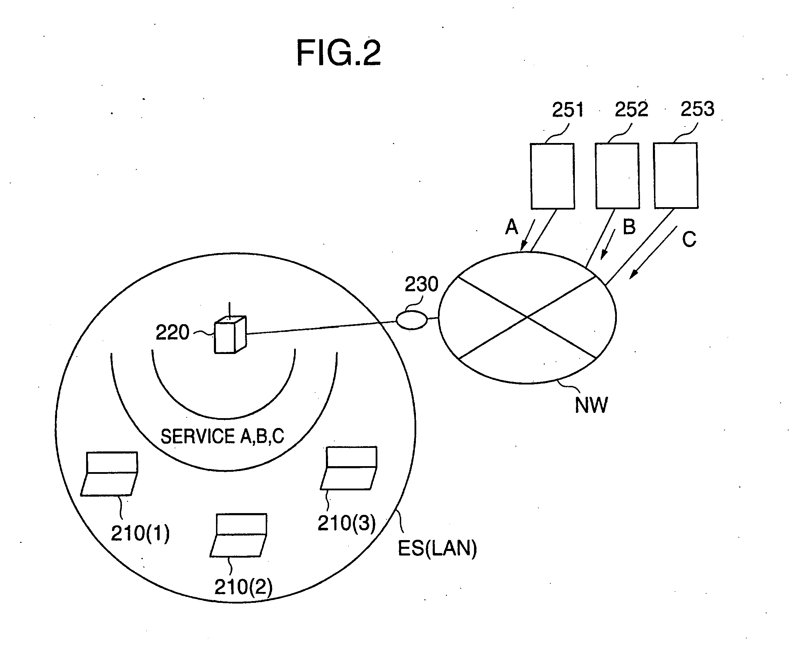

Therefore, a system such as that shown in FIG. 2 can be assumed as a system performing the above-mentioned provision of multicast service, for example. This example employs a radio base station 220 which can operate in accordance with IGPM which acts as an access point for a radio LAN. In this case, multicast information A, B and C provided by various servers 251, 252 and 253 via an IP network NW and a router 230 is distributed from the radio base station 220.

For example, when radio terminals 210(1), 210(2) and 210(3) including radio LAN connection communication devices belonging to a service area Es (LAN) of radio LAN and PC terminals request multicast information A, B and C different from each other, the radio base station 220 broadcasts all the multicast information A, B and C thus requested. Then, each of the radio terminals 210(1), 210(2) and 210(3) receives all the multicast information A, B and C. Then, in each radio terminal (PC terminal), necessary multicast information is extracted from the thus-received information to be used.

In case the radio base station 220 distributes multicast information in the service area Es (LAN) of radio LAN, no individual radio channel is set for each radio terminal. However, a data stream including the plurality of sets of multicast information broadcast from the radio base station 220 mixed therein is received by each radio terminal (cellular phone and PC terminal), and is stored thereby, and, then, only necessary information is extracted therefrom. Therefore, when each radio terminal receives a large amount of multicast information, a heavy burden is loaded thereon for buffering it.

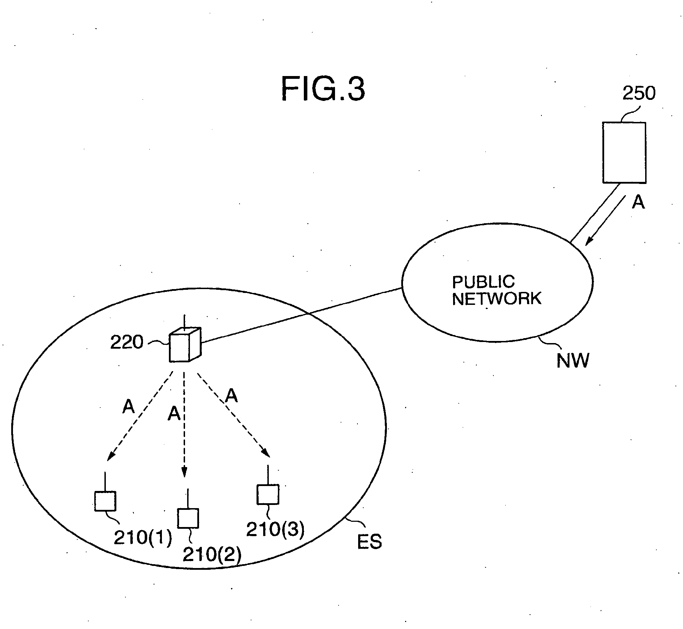

Furthermore, a system such as that shown in FIG. 3 can also be assumed as a system performing the above-mentioned radio provision of multicast service, for example. This example performs multicast service by using a radio base station 220 connected to a public network NW such as an existing PDC (Personal Digital Cellular) or PHS. In this case, multicast information A provided from a server 250 via the public network NW is distributed from the radio base station 220 to respective radio terminals 210(1), 210(2) and 210(3) belonging to a service area Es thereof. In distributing the multicast information A, an individual channel is set between each of the radio terminals 210(1), 210(2) and 210(3), and the radio base station 220.

In such a system in which multicast service is performed by using the base station 220 connected to the public network NW, the individual radio channel should be set for each radio terminal even for transmitting the same multicast information within the same service area Es. Accordingly, it is not possible to effectively utilize the radio resources.

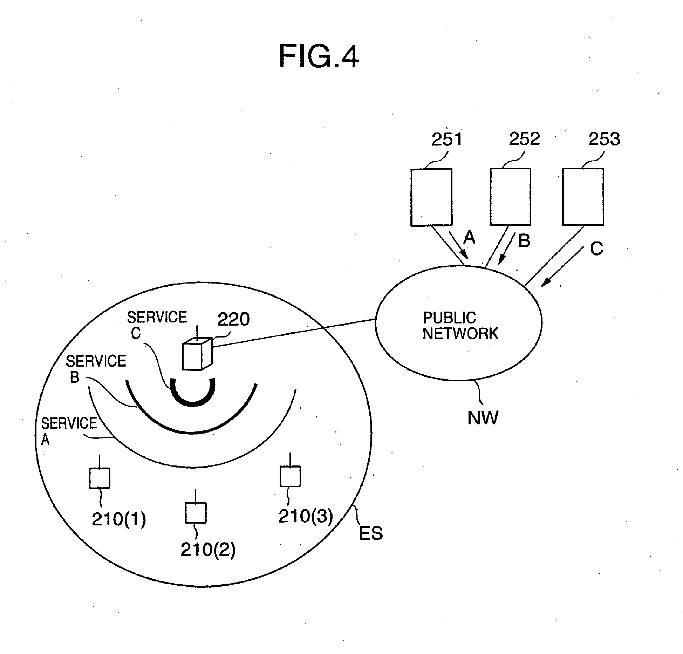

Furthermore, a system shown in FIG. 4 can also be assumed for performing the above-mentioned radio provision of multicast information, for example. This example performs multicast service in an advanced radio calling system (FLEX-TD). In this system, a radio base station 220 transmits multicast information provided from various servers 251, 252 and 253 via a public network NW by using a radio channel set for each set of multicast information regardless of whether or not radio terminals which desire the service belonging to a service area (radio zone) Es exist, in a broadcast-like manner. Each of the radio terminals 210(1), 210(2) and 210(3) can receive multicast information for which contract has been made previously. For example, the radio terminal 210(1) which made a contract for multicast information A can receive only the multicast information A from among multicast information A, B and C, the radio terminal 210(2) which made a contract for multicast information A and C can receive only the multicast information A and C, and the radio terminal 210(3) which made a contract for multicast information C can receive only the multicast information C.

However, in such a system, each radio terminal can receive only multicast information for which a contract has been made. However, even when the radio terminal which made a contract of receiving multicast information does not exist within the service area Es, the radio base station 220 should perform continuos transmission of the multicast information. Thus, it is not possible to effectively utilize the radio resources.

Furthermore, when information multicast distribution service is realized in a radio communication system, in particular, in a mobile communication system, smooth switching of base station from which information is received by a mobile set is needed when the mobile set which is a radio terminal moves across service areas (in case of handoff) while receiving the multicast distribution of the information.

EP0951198 describes a method of IP multicast over a wireless network. A method of enabling a base-station to decide when to add or delete a mapping from its database is described that involves transmission of host membership reports from mobile units within a cell.

Further background is provided in FENNER W: "Internet Group Management Protocol, Version 2", IETF Request for Comments, XX, XX, no. RFC 2236, 1 November 1997 (1997-11-01), pages 1-24.

Thus, in case information multicast distribution service is applied to a radio communication system, various problems should be solved.

DISCLOSURE OF THE INVENTION

According to an aspect of the present invention, there is provided a multicast service providing system in an IP network for performing a multicast information distribution service to a radio terminal present within a service area via a radio section from an information distributing apparatus, wherein:

said radio terminal has service continuation requesting means adapted to transmit to said information distributing apparatus a service continuation request signal for requesting continuation of multicast information distribution service, said service continuation request signal comprising a message wherein the absence of transmission of said message would lead to a termination of the multicast information distribution service;
said information distributing apparatus has service continuation management means adapted to manage as to whether or not the above-mentioned request for service continuation from the radio terminal for the multicast information distribution service has been made; and

**characterised in that** said information distributing apparatus is adapted to transmit to said radio terminal information managed by the service continuation management means indicating whether or not the continuation request for the multicast information distribution service has been made.

According to another aspect of the present invention, there is provided a multicast service providing method for an IP network, wherein:

when an information distributing apparatus performs multicast information distribution service to a radio terminal present within a service area via a radio section,
the method **characterised in that** said information distributing apparatus manages as to whether or not a request for service continuation from the radio terminal for the multicast information distribution service has been made, said service continuation request comprising a message wherein the absence of transmission of said message would lead to a termination of the multicast information distribution service, and said information distributing apparatus also transmits thus-managed information indicating whether or not the continuation request for the multicast information distribution service management has been made to the radio terminals, and
said radio terminal transmits a service continuation request signal to said information distributing apparatus when the information transmitted from the information distributing apparatus indicating whether or not service continuation request has been made by said radio terminal for the multicast information distribution service indicates a state that the request has not been made.

According to another aspect of the present invention, there is provided an information distributing apparatus adapted to perform a multicast information distribution service in an IP network via a radio section to a radio terminal present within a service area, the information distributing apparatus comprising:

service continuation management means adapted to manage as to whether or not a service continuation request has been made by the radio terminal for the multicast information distribution service, said service continuation request comprising a message wherein the absence of transmission of said message would lead to a termination of the multicast information distribution service,
**characterised in that** said information distributing apparatus is adapted to transmit to the radio terminal information managed by said service continuation management means indicating as to whether or not a continuation request for the multicast information distribution service has been made.

According to a further aspect of the present invention, there is provided a radio terminal adapted to receive a multicast information distribution service in an IP network from an information distributing apparatus via a radio section, the radio terminal comprising:

service continuation request means adapted to transmit a service continuation request signal for requesting provision of the multicast information distribution service to the information distributing apparatus, said service continuation request signal comprising a message wherein the absence of transmission of said message would lead to a termination of the multicast information distribution service; and
characterised by continuation request control means adapted to control said service continuation request means so as to cause it to transmit the service continuation request signal to the information distributing apparatus when information indicating whether or not service continuation request has been made by the radio terminal for the multicast information distribution service, transmitted by the information distributing apparatus which manages as to whether or not the service continuation request has been made by the radio terminal for the multicast information distribution service, indicates a state that the request has not been made.

A general object of the present invention is to provide a new and useful multicast service providing system, method and, information distributing apparatus, radio terminal and radio base station by which the above-described problems of the prior art can be solved.
A detailed object of the present invention is to provide a multicast service providing system, method and, information distributing apparatus, radio terminal and radio base station by which radio resources can be effectively utilized, and, also, it becomes possible to properly perform multicast information distribution service via a radio section to radio terminals present within a service area.
The objects of the present invention can be attained by configuring a radio terminal to have service continuation requesting means transmitting to an information distributing apparatus a service continuation request signal for requesting continuation of multicast information distribution service, in a multicast service providing system for performing multicast information distribution service to the radio terminal present within a service area via a radio section from the information distributing apparatus, and, by configuring the information distributing apparatus to have a service continuation management means managing as to whether or not the above-mentioned request for service continuation from the radio terminal for the multicast information distribution service has been made, the information distributing apparatus transmitting information managed by the service continuation management means to the radio terminal information indicating whether or not the continuation request for the multicast information distribution service has been made.

In this multicast service providing system, the radio terminal can determine whether or not the service continuation request signal is to be transmitted thereby, based on the information indicating whether or not continuation request for the multicast information distribution service has been made transmitted from the information distributing apparatus. Then, when this information indicating whether or not continuation request for the multicast information distribution service has been made indicates a state that this continuation request has not been made, the service continuation requesting means of the radio terminal can transmit the service continuation request signal to the information distributing apparatus.

Further, the information distributing apparatus can determine whether or not the multicast information distribution service should be continued, based on the management state of the service continuation management means.

In the above-mentioned multicast information distributing system, the service management means may be configured to have management state resetting means resetting the management state into a state that no request for continuation of the multicast information distribution service has been made from the radio terminal.

In this multicast service providing system, the information distributing apparatus can positively determines whether or not the radio terminal requesting the multicast information distribution service is present within the service area. That is, when the service continuation request signal is transmitted from the radio terminal after the management state of the service management means is reset to a state that no request for continuation of the multicast information distribution service has been made, the information distributing apparatus can determine that the radio terminal which request the multicast information distribution service is present within the service area.

Furthermore, in the above-mentioned multicast information distributing system, the above-mentioned management state resetting means may be configured to perform the resetting operation for the management state every predetermined period.

In this multicast information distributing system, the above-mentioned positive determination made by the information distribution apparatus can be made periodically.

Furthermore, in the above-mentioned multicast information distributing system, the radio terminal may have continuation request control means performing control such that, when the information indicating whether or not continuation request for the multicast information distribution service has been made transmitted from the information distribution apparatus indicates a state that the request has not been made, the service continuation requesting means transmits the service continuation request signal to the information distributing apparatus.

In this multicast service providing system, the request for multicast information distribution service continuation can be properly transmitted according to the management state of the information distributing apparatus.

Further, in the above-mentioned multicast service providing system, the above-mentioned continuation request control means may be configured to control the above-mentioned service continuation requesting means so that the above-mentioned service continuation request signal is transmitted after a first random time has elapsed since the information indicating the state that no continuation request has been made for the multicast information distribution service was received.

In this multicast service providing system, in case a plurality of radio terminals requesting continuation of the multicast information distribution service exist within the service area, it is possible to reduce a probability of collision of the service continuation request signals transmitted to the information distributing apparatus from the respective radio terminals. That is, in the case where the plurality of radio terminals requesting continuation of the multicast information distribution service exist within the service area, each radio terminal transmits the above-mentioned service continuation request signal at a random timing after receiving from the information distributing apparatus the information indicating the state that no continuation request has been made for the multicast information distribution service. Thereby, a probability that each radio terminal simultaneously transmits the service continuation request signal to the information distributing apparatus is made smaller.

Further, in the above-mentioned multicast service providing system, the radio terminal may be configured to have re-transmission control means performing a control such that the above-mentioned service continuation requesting means re-transmits the service continuation request signal to the information distributing apparatus when the information indicating as to whether or not continuation request has been made for the multicast information distribution service has not been changed into information indicating that the request has been made within a predetermined time after the service continuation requesting means transmute the service continuation request signal.

In this multicast service providing system, even when the service continuation request signal transmitted from the radio terminal has not been received by the information distributing apparatus by some reason, it is possible to prevent the multicast information distribution service from being terminated for the radio terminal.

Further, in the above-mentioned multicast service providing system, the above-mentioned re-transmission control means may be configured to control the above-mentioned service continuation requesting means so that the above-mentioned service continuation request signal may be transmitted again after a second random time has elapsed after the above-mentioned predetermined time had elapsed since the service continuation requesting means transmitted the service continuation request signal.

In this multicast service providing system, in case a plurality of radio terminals exist within the service area, it is possible to prevent the service continuation request signals re-transmitted from the respective radio terminals from colliding.

Further, in the above-mentioned multicast service providing system, a setting may be made such that a time elapsing since the above-mentioned management state resetting means reset the management state of the service request management means into a state that no request for continuation of the multicast information distribution service until the above-mentioned service continuation request means re-transmits the service continuation request signal may be shorter than a time elapsing since the above-mentioned management state was reset to a state that continuation for a service has not been made from the radio terminal for the multicast information distribution service until resetting is made subsequently.

In this multicast service providing system, it is possible to positively change the management state of the information distributing apparatus by the above-mentioned service continuation request signal re-transmitted.

Further, in the above-mentioned multicast service providing system, the above-mentioned service continuation management means may be configured to manage as to whether or not continuation request has been made for the multicast information distribution service by using a flag which is made to be ON when the service continuation request signal is received from the radio terminal.

In this multicast service providing system, it is possible to easily perform management performed by the service continuation management means in the above-mentioned information distributing apparatus.

Further, the above-mentioned object of the present invention may be attained as a result of the above-mentioned information distributing apparatus which performs multicast information distribution service to radio terminals present within a service area via a radio section having service continuation management means managing as to whether or not request for service continuation from the radio terminals for the multicast information distribution service has been made, and being configured so that information managed by the service continuation management means indicating whether or not the continuation request for the multicast information distribution service has been made may be transmitted to the radio terminals.

Further, the above-mentioned object of the present invention may be attained as a result of a radio terminal which receives multicast information distribution service from an information distributing apparatus via a radio section having service continuation requesting means transmitting a service continuation signal for requesting provision of the multicast information distribution service to the information distributing apparatus, and continuation request control means performing control such that the above-mentioned service continuation requesting means may transmit the service continuation request signal to the information distributing apparatus when information, transmitted from the information distributing apparatus managing as to whether or not a request for service continuation has been made by the radio terminal for the multicast information distribution service, indicating whether or not service continuation request has been made from the radio terminal for the multicast information distribution service indicates a state that the request has not been made.

Further, the above-mentioned object of the present invention may be attained as a result of, in a multicast service providing method by which multicast information distribution service is performed by an information distributing apparatus via a radio section on a radio terminal present in a service area thereof, the information distributing apparatus informing all the radio terminals present in the service area of information for identifying multicast information on distribution service and radio channels used for the distribution of the multicast information by using a predetermined radio channel, and the respective radio terminals within the service area receiving the multicast information distribution service from the information distributing apparatus via the thus-informed radio channels.

In this multicast service providing method, the radio terminal receives the multicast information distribution service by using the radio channel informed of by the information distributing apparatus. Accordingly, the radio channel used for the multicast information distribution service can be made to be only the radio channel informed of by the information distributing apparatus, and, also, the distribution service made via the radio channel can be made to be only of multicast information corresponding to the informed radio channel.

The above-mentioned information for identifying the multicast information informed of by the information distributing apparatus is not particularly limited as long as it can be used for identifying the multicast information provided based on this information at the radio terminal, and, may be information identifying a type of the multicast information, the channel providing it (multicast group address), information identifying a server which originally provides the information, a title of the multicast information, or the like.

Further, in the above-mentioned multicast service providing method, the information distributing apparatus may be configured to manage correspondence relationship between the information for identifying multicast information on distribution service and the radio channels used for distributing the multicast information, informs all the radio terminals present within the service area management information indicating the correspondence relationship by using the above-mentioned predetermined radio channel, and, each of the radio terminals present within the service area receives the desired multicast information distribution services by using the corresponding radio channels based on the management information.

In this multicast service providing method, it is possible to inform the radio terminals of relationship between the information for identifying a plurality of sets of multicast information on distribution service and the radio channels used for distributing the respective sets of multicast information without error.

Further, in the above-mentioned multicast service providing method, the radio terminal transmits a service request signal for requesting distribution service for multicast information not included in the above-mentioned management information, and, when receiving the above-mentioned service request signal from the radio terminal, the information distributing apparatus adds to the above-mentioned management information correspondence relationship between information for identifying the multicast information concerning this request and a radio channel used for distributing this multicast information, and, also, starts distribution service of the multicast information concerning the request by using this radio channel.

In this multicast service providing method, the radio terminal can receive distribution service of the new multicast information other than the multicast information which is currently on distribution service.

Further, the above-mentioned object of the present invention may be attained as a result of, in an information distributing apparatus which performs multicast information distribution service for radio terminals present within a service area via a radio section, a configuration being made such as to have informing control means for informing of all the radio terminals present within the service area information for identifying multicast information on distribution service and radio channels used for distributing the multicast information by using a predetermined radio channel, and, such that each of the radio terminals present within the service area can receive the multicast information distribution service via the thus-informed radio channels.

Further, the above-mentioned object of the present invention may be attained as a result of, in a radio terminal which receives multicast information distribution service via a radio section from an information distributing apparatus, a configuration being made such as to have service state reception control means receiving from the information distributing apparatus management information indicating correspondence relationship between information for identifying multicast information on distribution service and radio channels used for distributing the multicast information, such as to receive from the information distributing apparatus the desired multicast information distribution service via the corresponding radio channel based on the management information received by the service state reception control means.

Further, the above-mentioned object of the present invention may be attained as a result of, in a multicast service providing method by which multicast data is distributed to radio terminals from a radio base station, a configuration being made such that the radio terminal receiving the multicast data may transmit a distribution request for the multicast data to the radio base station on movement destination in case a necessity arises such that the other party of communication be switched from the radio base station on movement origin to the radio base station on movement destination, the radio base station on movement destination may transmit information of a radio channel used for distributing the multicast data to the above-mentioned radio terminal in response to the distribution request given from the above-mentioned radio terminal, the radio terminal may switch the radio channel based on the information of the radio channel given from the above-mentioned radio base station on movement destination so as to receive the multicast data from the radio base station on movement destination.

In this multicast service providing method, when a necessity arises such that the other party of communication be switched from the radio base station on movement origin to the radio base station on movement destination, the radio terminal should merely transmit a distribution request to the radio base station on movement destination, and, thereby, in response to the distribution request, information of the radio channel used for distributing the multicast data is transmitted from the radio base station on movement destination. Therefore, the radio terminal receives the multicast data by switching the radio channel based on this information of the radio channel. Accordingly, it is possible to switch the radio base station acting as the other party of communication, rapidly than in a case, as in the prior art, the radio terminal again receives a perch channel from the radio base station on movement destination, further receives a multicast management table based on information included in the perch channel, then, recognizes a radio channel to be used for transmission from the management table, and, thus, receives the multicast data.

Further, in the above-mentioned multicast service providing method, a configuration may be made such that the radio terminal may transmit the above-mentioned distribution request for the multicast data to the radio base station on movement origin, and the above-mentioned distribution request for the multicast data may be transmitted to the radio base station on movement destination via this radio base station on movement origin.

In this multicast service providing method, the distribution request given from the radio terminal can be made to be positively received by the radio base station on movement destination.

Further, in the above-mentioned multicast service providing method, a configuration may be made such that, in case the radio terminal cannot receive information of a radio channel to be used for distributing multicast data within a predetermined time after transmitting the distribution request, the radio terminal may transmit the distributing request again.

Also by this multicast service providing method, the distribution request given from the radio terminal can be made to be positively received by the radio base station on movement destination.

Further, in the above-mentioned multicast service providing method, a configuration may be made such that the radio terminal may transmit the distribution request several times.

Also by this multicast service providing method, the distribution request given from the radio terminal can be made to be positively received by the radio base station on movement destination.

Further, in the above-mentioned multicast service providing method, a configuration may be made such that the radio base station on movement origin may obtain information concerning multicast data distributed by an adjacent radio base station, and transmit the information concerning the multicast data, and, in case the radio terminal determines that the radio base station on movement destination does not distribute the desired multicast data based on the information concerning the multicast data thus given from the radio base station on movement origin, the radio terminal may transmit the distribution request to the radio base station on movement destination or the radio base station on movement origin so that the above-mentioned distribution request may be received by the radio base station on movement destination.

In this multicast service providing method, the multicast data which the radio base station on movement destination distributes is made to be previously recognized by the radio terminal, and, when the radio base station on movement destination distributes the desired multicast data, the multicast data can be received by the radio terminal immediately without transmission of distribution request. Accordingly, reception of the multicast data at a time of movement can be made rapidly.

Further, for example, the information concerning the multicast data includes information for identifying the multicast data on distribution, and information of radio channels by which the multicast information is distributed.

Further, the object of the present invention may be attained in a radio base station which transmits multicast data to a radio terminal, as a result of a configuration being made such as to have distribution request receiving means receiving a distribution request for multicast data transmitted from the radio terminal, and radio channel information transmitting means transmitting information of a radio channel used for distributing multicast data in response to the distributing request for the multicast data given from the radio terminal.

In this case, a configuration may be made such that the above-mentioned distribution request receiving means may receive the distribution request for the multicast data transmitted from the radio terminal via another radio base station. Further, a configuration may be made such that the above-mentioned distribution request receiving means may have information obtaining means obtaining information concerning multicast data transmitted from a radio base station adjacent to the own station, and multicast information transmitting means transmitting the information concerning the multicast information.

Further, the above-mentioned object of the present invention may be attained, as a result of, in a radio terminal which receives multicast data distributed by a radio base station, a configuration being made such as to have distribution request transmitting means transmitting a distribution request for multicast data to the radio base station on movement destination in case a necessity arises such that the other party of communication be switched from the radio base station on movement origin to the radio base station on movement destination, and multicast data reception control means switching the radio base station based on information concerning a radio channel used for distributing the multicast data transmitted from the radio base station on movement destination in response to the distribution request so as to receive the multicast data distributed from the radio base station on movement destination.

In this case, a configuration may be made such that the above-mentioned distribution request transmitting means may transmit the above-mentioned distribution request for the multicast data to the radio base station on movement origin, and, then, the above-mentioned distribution request for the multicast data may be transmitted to the radio base station on movement destination via the radio base station on movement origin. Further, a configuration may be made such that the above-mentioned distribution request transmitting means may transmit the distribution request again in case information concerning a radio channel to be used for distributing the multicast data cannot be received thereby. Further, a configuration may be made such that the above-mentioned distribution request transmitting means may transmit the distribution request several times. Further, a configuration may be made such that the above-mentioned distribution request transmitting means may transmit the distribution request to the radio base station on movement destination or the radio base station on destination origin so that the above-mentioned distribution request for the multicast data may be received by the radio base station on movement destination in case the distribution request transmitting means determines that the radio base station on movement destination does not distribute the desired multicast data based on information, received from the radio base station on movement origin, concerning multicast information distributed from the radio base station adjacent to the station.

Other objects, features, and advantages of the present invention may become apparent from the following detailed description made together with attached drawings.

BRIEF DESCRIPTION OF THE DRAWINGS

FIG. 1 is a sequence diagram showing a communication procedure between a radio base station and a radio terminal in a multicast service providing system in the prior art.

FIG. 2 is a diagram showing a first example of a multicast service providing system in the prior art applied to a radio section.

FIG. 3 is a diagram showing a second example of a multicast service providing system in the prior art applied to a radio section.

FIG. 4 is a diagram showing a third example of a multicast service providing system in the prior art applied to a radio section.

FIG. 5 is a block diagram showing an example of a basic configuration of a multicast service providing system in a first embodiment of the present invention.

FIG. 6 is a block diagram showing an example of a configuration of a radio base station in the system shown in FIG. 5.

FIG. 7 is a diagram showing an example of a management table which the radio base station in the multicast service providing system has.

FIG. 8 is a diagram showing an example of state transition in the radio base station.

FIG. 9 is a flow chart which shows an example of a processing procedure in the radio base station.

FIG. 10 is a flow chart which shows an example of a processing procedure in each radio terminal.

FIG. 11 is a sequence diagram showing an example (number 1) of a communication procedure between the radio base station and the radio terminal.

FIG. 12 is a sequence diagram showing an example (number 2) of the communication procedure between the radio base station and the radio terminal.

FIG. 13 is a diagram showing an example of a configuration of a multicast information channel table for managing multicast information channels by which service provision is made from the radio base station.

FIG. 14 is a flow chart which shows an example of a processing procedure in the radio base station which performs service provision.

FIG. 15 is a flow chart which shows an example of a processing procedure in the radio terminal which receives service provision from the radio base station.

FIG. 16 is a diagram showing an example of a relationship between various information transmitted by the radio base station in case of performing multicast service, and transmission channels therefor.

FIG. 17 is a flow chart which shows an example of a processing procedure for the radio base station to determine continuation of service with the radio terminal.

FIG. 18 is a diagram showing an example of a configuration of a multicast information channel table in case of transmitting a service continuation signal by a same channel as that for the multicast information channel table.

FIG. 19 is a flow chart which shows an example of a processing procedure for informing the radio base station that the radio terminal desires continuation of service.

FIG. 20 is a flow chart which shows an example of a processing procedure at a time of the radio terminal terminating reception of multicast information.

FIG. 21 is a diagram showing an example of a basic configuration of a system to which multicast service providing method in a third embodiment of the present invention is applied.

FIG. 22 is a conceptual diagram of operation in a first example of operation.

FIG. 23 is a flow of operation in the first example of operation.

FIG. 24 is a conceptual diagram of operation in a second example of operation.

FIG. 25 is a diagram showing an example of a multicast management table used in the second example of operation.

FIG. 26 is a flow of operation in the second example of operation.

BEST MODE FOR CARRYING OUT THE INVENTION

Hereafter, embodiments of the present invention will be described based on the drawings.

First, a multicast service providing system in a first embodiment of the present invention will be described.

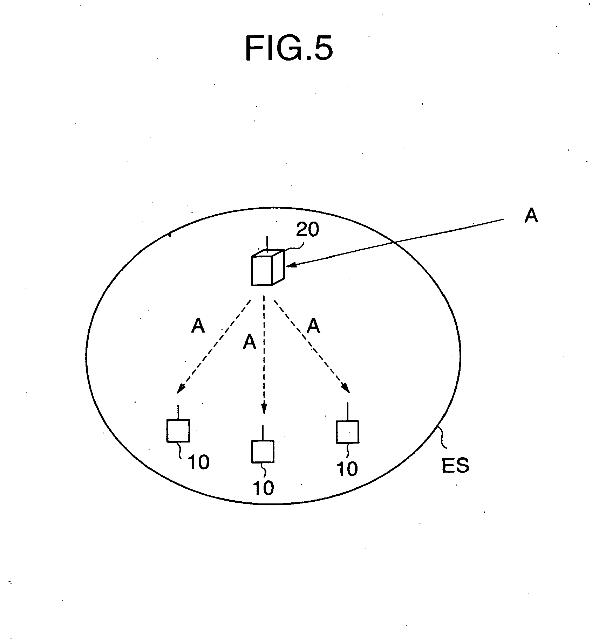

This system is configured as shown in FIG. 5.

In FIG. 5, a radio base station 20 broadcasts information A (henceforth, referred to as multicast information) provided, for example, through a public network, etc. to a service area Es. Radio terminals 10 (cellular phones, personal computers which have a communication function, or the like) present in this service area Es can receive the multicast information A broadcast by the radio base station 20.

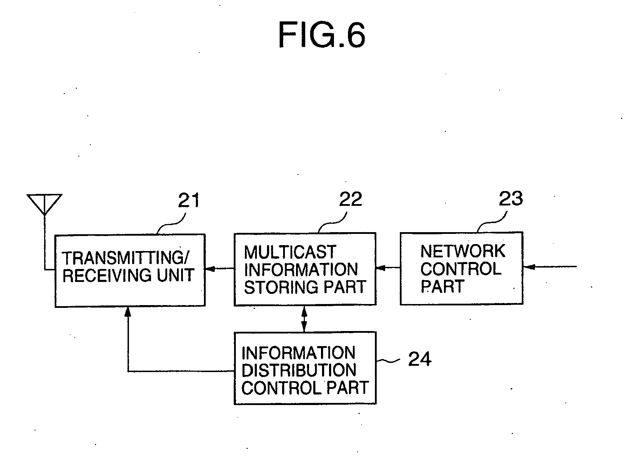

The radio base station 20 is configured as shown in FIG. 6.

In FIG. 6, this radio base station 20 has a transmitting/receiving unit 21, a multicast information storing part 22, a network control part 23, and an information distribution control part 24. The transmitting/receiving unit 21 performs radio communications with each radio terminal 10 present in the service area Es. The multicast information storing part 22 stores multicast information to be distributed which the network control part 23 receives from the network. The information distribution control part 24 performs control for distributing the multicast information stored in the multicast information storing part 22 through the transmitting/receiving unit 21 to each radio terminal 10 present in the service area Es.

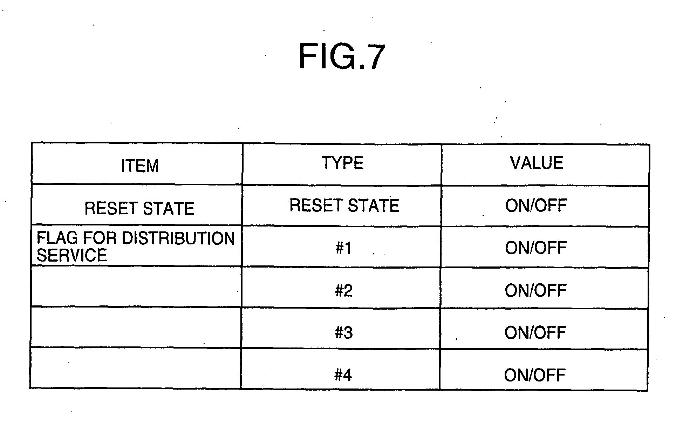

The information distribution control part 24 has a management table as shown in FIG. 7. This management table is used for managing as to whether requests for continuation have been made for various distribution services of multicast information. In FIG. 7, when continuation requests for various distribution services (multicast groups) of multicast information are made, flags (#1, #2, #3, and #4, referred to also as received flags) corresponding to the services are made to be ON, and, when no continuation requests for distribution services of multicast information are made, the flags corresponding to the services are made to be OFF.

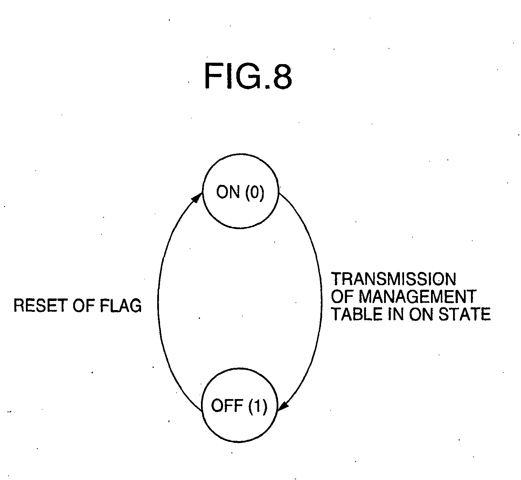

Moreover, the radio base station 20 (information distribution control part 24) resets (makes to be OFF) all the flags in the above-mentioned management table at a predetermined timing. Then, the state (ON/OFF) of each flag managed in the above-mentioned management table is broadcast from the radio base station immediately after the flag reset timing (after a predetermined time). Such a state of the radio base station 20 is managed by a reset state flag of a reset state item in the above-mentioned management table. Namely, the reset state flag is made to be ON (ON) together with resetting (OFF) of the flags corresponding to the above-mentioned various distribution services, and the reset state flag is made to be OFF (OFF) from a timing immediately after that (after a predetermined time) at which each flag state is broadcast until all the flags are subsequently reset. Therefore, the state of the radio base station 20 changes by turn between a state where the reset state flag is made to be ON (ON), and a state where the reset state flag is made to be OFF (OFF), as shown in FIG. 8.

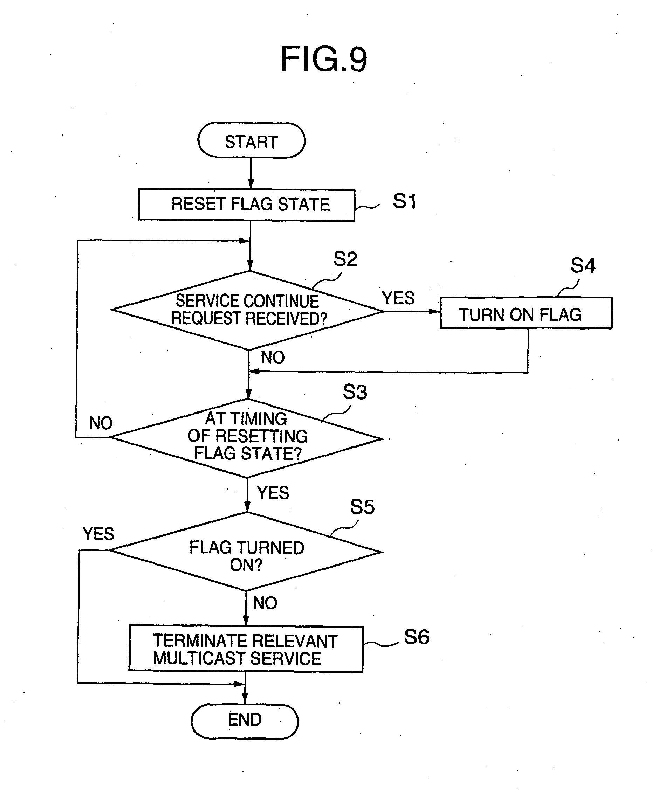

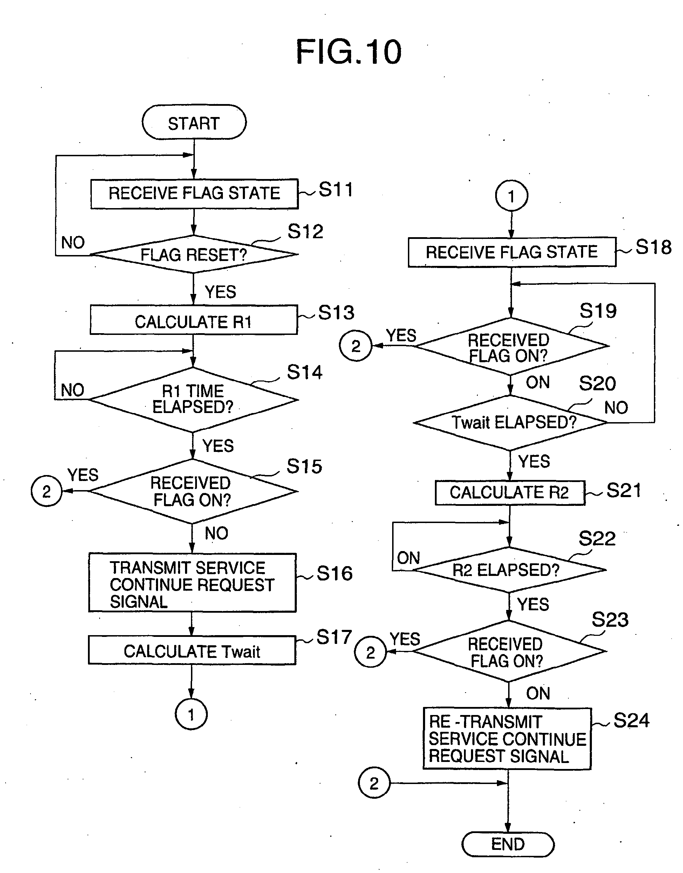

In case the various distribution services of multicast information are provided from the radio base station 20, processing is performed by the radio base station 20 according to a procedure shown in FIG. 9, and the radio terminal 10 which receives the multicast information performs processing according to a procedure shown in FIG. 10.

In FIG. 9, the radio base station 20 resets the flags (#1, #2, #3, #4) corresponding to all the distribution services in the above-mentioned management table (see FIG. 6) at a predetermined timing (S1). The reset state flag is made to be ON at this time. The reset state flag is made to be OFF immediately after that (after the predetermined time). Thus, a signal showing the reset state flag which is made to be ON or made to be OFF is broadcast using a different channel from a channel used for the various distribution services of multicast information. Moreover, when the above-mentioned reset state flag is switched to OFF, a signal showing the states of the flags corresponding to the various distribution services managed in the above-mentioned management table are broadcast using the predetermined channel.

When the flags corresponding to all distribution services are reset as mentioned above, it is determined (S3) whether it is the subsequent timing of flag reset, while it is determined (S2) whether the radio base station 20 has received a service continuation request signal (which will be described later in details) from any one of the radio terminals 10. In this process, in response to reception of the service continuation request signal from any one of the radio terminals 10 (YES at S2), the flag corresponding to the relevant service is made to be ON in the management table (S4).

When it becomes the subsequent timing of flag reset (YES at S3), it is determined whether the flag corresponding to each service of the management table has been made to be ON (S5). Then, the distribution service corresponding to the flag which has been made to be ON is continued, the distribution service corresponding to the flag which has been made to be OFF is terminated (S6), and then, the series of processing is finished (YES at S5). Then, again, while all the flags corresponding to distribution services of multicast information are reset, and, also, the series of processing is started from the processing (S1) at which the reset state flag is made ON.

Each radio terminal 10 which receives distribution service of multicast information performs processing according to a procedure shown in FIG. 10, while the radio base station 20 performs the above-describe processing and provides the various distribution services of multicast information.

In FIG. 10, the radio terminal 10 receives a signal indicating the reset state flag broadcast by using the predetermined channel, and, in this process, it determines (S12) whether or not this reset state flag is made to be ON, i.e., whether the flags corresponding to the multicast information distribution services are reset. When it is determined that the reset state flag is made to be ON (YES at S12), a random time R1 is calculated based on a random number generated by a random number generator (S13). Then, a timer in which the random time R1 is set starts operation. After that, it is determined (S14) whether or not the timer has reached the random time R1 which is the set time thereof.

When the timer has reached the time R1 (time out), a signal showing the flag corresponding to the multicast information distribution service which the radio base station 20 broadcasts is received from the timing at which the reset state flag is made to be OFF, and it is determined whether the flag corresponding to the service which the radio terminal 10 receives is made to be ON (S15). There, when the relevant flag (received flag) is made to be OFF (NO at S15), as management is made by the radio base station 20 such that it is recognized that the service continuation signal for the corresponding service has not been received, the radio terminal 10 transmits the service continuation signal to the radio base station 20 in case it desires continuation of the service (S16).

Then, Twait which is a random time is calculated (S17), and reception of the signal showing the states of the flags corresponding to the various multicast information distribution services broadcast from the radio base station 20 is started (S18). Then, it is determined whether or not the random time Twait has been reached (S19), while it is determined whether the flag (received flag) corresponding to the distribution service which the radio terminal 10 receives is made to be ON (S20). There, in case the flag corresponding to the relevant service has been already made to be ON (see the processing at S2 and S4 in FIG. 9) in response to the service continuation request signal transmitted from the relevant radio terminal 10 as mentioned above (see the processing in S16), the radio terminal 10 finishes the series of processing, and repeats the processing of determining whether or not the reset state flag is made to be ON (the flags corresponding to the services are made to be OFF) again (S11, S12).

In a condition where the random time R1 has elapsed from the timing of detection of ON of the reset state flag, when the flag corresponding to the relevant service has been already made to be ON in the radio base station 20 in response to the service continuation request signal from another radio terminal 10 which receives the service (YES at S15), the radio terminal 10 finishes the series of processing, and repeats the processing of determining whether or not the reset state flag is made to be ON (the flags corresponding to the services are made to be OFF) again (s11, S12).

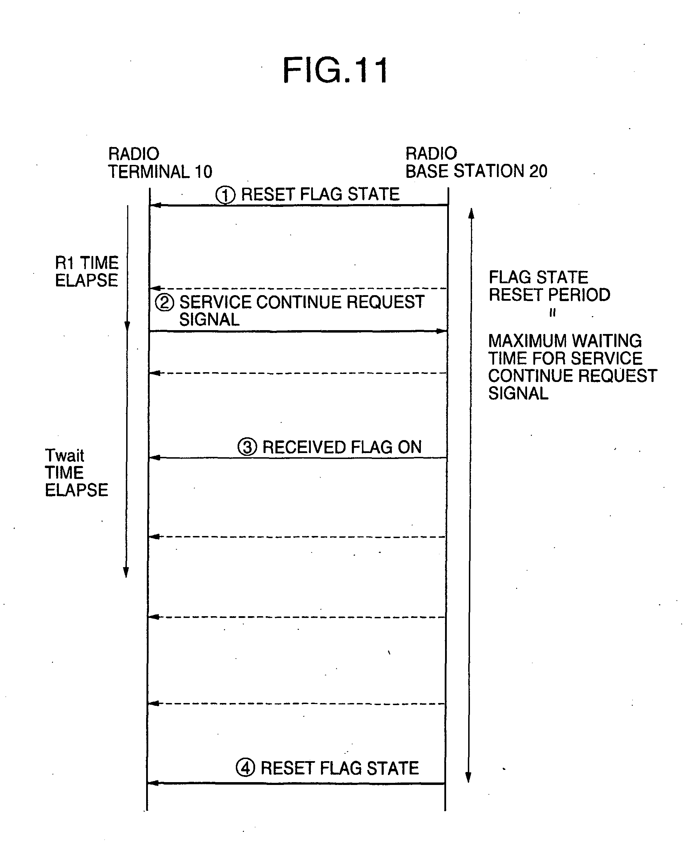

As a result of the processing being performed in accordance with the above-described procedure by the radio base station 20 and radio terminals 10, a communication according to a sequence shown in FIG. 11 is performed between the radio base station 20 and the radio terminals 10, for example.

In the process in which the multicast information distribution service is made on the radio terminal 10 by the radio base station 20, when the reset state flag is made to be ON by the radio base station 20 (①), that is, the flags (received flags) corresponding to the respective services are made to be OFF, the signal indicating the flags corresponding to the various services are transmitted to the radio terminal 10 by the radio base station 20 at predetermined timing repeatedly (see broken line in FIG. 11). In this process, when receiving the signal indicating the reset state flag having the ON state (the flags corresponding to the services are made to be OFF) from the radio base station 20 (①), the radio terminal 10 transmits the service continuation request signal to the radio base station 20 after elapse of a random time R1 (②). Then, the radio terminal 10 monitors as to whether the flag corresponding to the relevant service is made to be ON during a random time Twait.

When receiving the above-mentioned service continuation request signal from the relevant radio terminal 10 or another radio terminal 10, the radio base station 20 makes the flag corresponding to the service to be ON. When detecting that the flag corresponding to the service has been made to be ON (③), the radio terminal 10 monitors the reset state flag being made to be ON (④). Then, each time the reset state flag is made to be ON, communication is performed between the radio base station 20 and radio terminal 10 in accordance with the above-mentioned procedure.

By the above-mentioned processing, the radio base station 20 resets (makes to be OFF) the flags corresponding to the various multicast information distribution services at predetermined timing, and, also, after the resetting, when receiving the service continuation request signal from any radio terminal 10, the radio base station 20 makes the flag corresponding to the service to be ON. Accordingly, the radio base station 20 can determine continuation and termination of the services based on the flags corresponding to the respective services managed by the management table (see FIG. 7) without managing the number of the radio terminals 20 which receive the multicast information distribution services in the service area Es, or the like.

Moreover, each radio terminal 10 can check whether another radio terminal 10 which requires the same service as that of itself exists in the same service area Es by monitoring the states of the flags (received flags) corresponding to the respective services broadcast from the radio base station 20. Then, when the relevant flag is made to be OFF, the radio terminal 10 which desires the service transmits the service continuation request signal to the radio base station 20, as recognizing that no other radio terminal 10 which requires the same service as that of itself exists. On the other hand, when the relevant flag is made to be ON, the radio terminal 10 that desires the service does not transmit the service continuation request signal, as recognizing that another radio terminal 10 which requires the same service as that of itself exists.

Thus, the service continuation request signals are not transmitted from a plurality of radio terminals 10, respectively, which desire the same service in the same service area Es, and thus congestion is not likely to occur in the radio section.

In case the service continuation request signal is transmitted from the radio terminal 10 which processes according to the above-described procedure (see FIG. 10), the service continuation request signal may be unable to be received by the radio base station 20 due to interference of signals, collision with the service continuation request signal simultaneously transmitted by chance from another radio terminal, or the like in the radio channel. In such a case, as will be described below, the radio terminal 10 performs re-transmission of the service continuation request signal.

After transmitting the service continuation request signal to the radio base station 20 (S16), the radio terminal 10 which processes in accordance with the above-described procedure shown in the FIG. 10 further calculates a random time R2 again (S21) after a random time Twait has elapsed, in case the OFF state of the flag corresponding to the service received from the radio base station 20 is maintained during the random time Twait (NO at S19, and also, YES at S20). Then, after.the random time R2 elapsed (YES at S22), it determines again whether or not th flags (received flags) corresponding to the services broadcast by the radio base station 20 are made to be ON (S23). Then, when the flag corresponding to the service has the ON state, the radio terminal 10 finishes the series of processing while receiving the multicast information distribution service broadcast by the radio base station 20.

The radio terminal 10 re-transmits the service continuation request signal, as recognizing that the service continuation request signal (see S16) transmitted last time has not been received by the radio base station 20, when the flag corresponding to the service received has the OFF state (S24). Then, after finishing re-transmitting of the service continuation request signal, the radio terminal 10 finishes the series of processing.

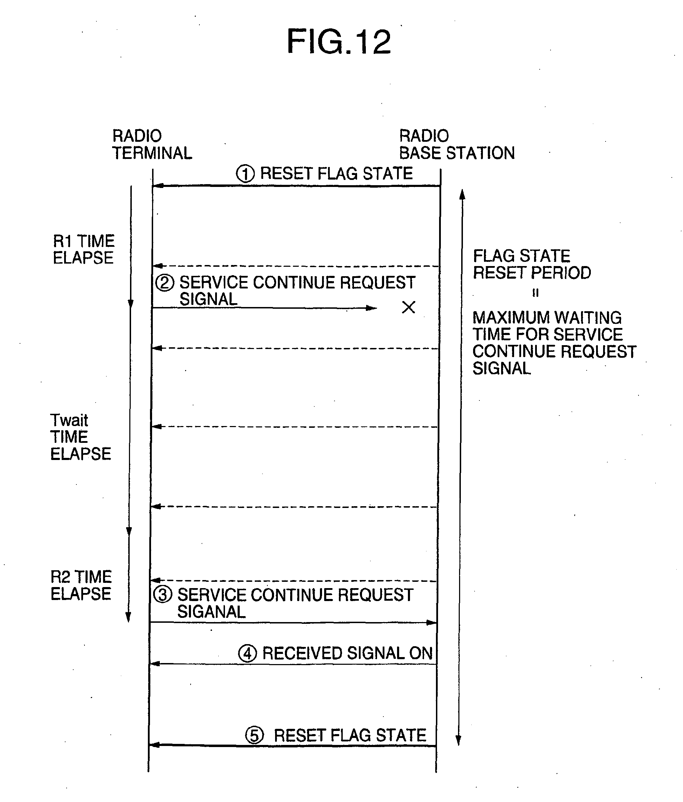

Between the radio base station 20 and the radio terminal 10, as a result of the processing according to the above-described procedure being performed by he radio terminal 10, communication according to a sequence shown in FIG. 12 is performed.

In the process in which the radio base station 20 is performing multicast information distribution service on the radio terminal 10, when the reset state flag is made to be ON by the radio base station 20 (①), same as in the case described above (see FIG. 11), that is, when the flags corresponding to the respective services (received flags) are made to be OFF, the signal indicating the states of the flags corresponding to the respective services is repeatedly transmitted to the radio terminal 10 from the radio base station 20 at predetermined timing (see the broken line in FIG. 12). In this process, when receiving the signal indicating the reset state flag having the ON state (the flags corresponding to the services are made to be OFF) (①), the radio terminal 10 transmits the service request continuation signal to the radio base station 20 after elapse of a random time R1 (②). Then, the radio terminal 10 monitors, during a random time Twait, whether the flag corresponding to the relevant service is made to be ON.

In case the above-mentioned service request signal is not received by the radio base station 20 by some reason such as signal interference or collision ($\times$ mark), and the flag corresponding to the service given from the radio base station 20 is not made to be ON during the random time Twait, the radio terminal 10 re-transmits the service request continuation signal (③) after further elapse of the random time R2 after elapse of the random time Twait. When the flag corresponding to the relevant service managed by the radio base station 20 is made to have the ON state by this service continuation request signal re-transmitted by the radio terminal 10, after receiving this flag in the ON state (④), the radio terminal 10 monitors that the reset state flag is made to be ON (⑤).

Since the service continuation request signal is re-transmitted from the radio terminal 10 when the service continuation request signal transmitted from the radio terminal 10 is not received by some reason by the radio base station 20, the flag corresponding to the relevant service managed by the radio base station 20 can be positively made into the ON state.

In the above-mentioned system, relationship between the reset period Treset, that is, the period at which the flags corresponding to all the multicast information distribution services are reset, the above-mentioned random times R1 and R2, and the random time Twait are set as follows, for example.

When making the random time Twait constant, it is set as follows:

$$Twait = Treset - R1max - R2max \qquad (1)$$

Moreover, when making the random time Twait variable, it is set as follows:

$$Twait = (Treset - R1max) \times RATE \qquad (2)$$

When making the Twait constant and applying the same value for every Treset cycle, the maximum time of Twait is calculated according to the above-mentioned formula (1). Accordingly, calculation of Twait is realizable by setting up a value smaller than Treset - R1 as the maximum (R2max) of R2, and then using the above-mentioned formula (1).

Moreover, when making the Twait variable and changing it for every Treset, it is also possible to use a value acquired by multiplying (Treset - R1) by a fixed coefficient RATE. In this case, since R1 is a random value, Twait can be made variable. As RATE becomes larger in the above-mentioned formula (2), the maximum of R2 becomes smaller, and probability of collision at the time of re-transmitting becomes higher. However, since the probability that the service continuation request signal from another radio terminal which receives the same multicast information distribution service is transmitted becomes higher, there is an advantage that the necessity of re-transmission becomes lower.

On the other hand, when RATE is smaller in the above-mentioned formula (2), the probability of collision with the service continuation request signal from another radio terminal which receives the same multicast information distribution service becomes higher. However, since R2 can be made larger, there is an advantage that the probability of the collision with the service continuation request signal from another radio terminal which receives the same multicast information distribution service becomes lower, at the time of re-transmitting the service continuation request signal.

Moreover, the probability of collision of the service continuation request signals can be reduced by making RATE in the above-mentioned formula (2) have a unique value for every radio terminal.

Although, in the above-mentioned example, re-transmitting of the service continuation request signal is made once, it is easily realizable to change respective parameters so that re-transmitting of the service continuation request signal may be performed several times.

Namely, Twait and R2max may be set such that:

$$Treset = A \times (Twait + R2max) \qquad (3)$$

'A' is an integer and expresses the number of times of retransmissions.

As, for the radio base station connected to the network which supports the version 1 of IGMP, the maximum time for which an IGMP router waits for a report from a host is 10 seconds, and, thereby, it is reasonable to set the Treset period of the radio base station equal to or shorter than 10 seconds. Since the maximum time for which the IGMP router waits for the report from the host is specified in a message in the case of the network corresponding to the version 2, it is reasonable to set the Treset period to be equal to or shorter than the specified time. However, as for this Treset period, it is also possible to set it regardless of the parameter of IGMP, and, then, for the router, the radio base station may perform operation in accordance with IGMP. Furthermore, in case multicast information distribution service in a network which does not support IGMP is carried out, this Treset period may be set as a value original for the radio base station.

In each above-mentioned example, the radio base station acts as an information distributing apparatus.

A second embodiment of the present invention will now be described.

In this embodiment, a radio channel used for distribution of each multicast information is informed of to each radio terminal of a service area. Thereby, each radio terminal can receive the desired multicast information by using the radio channel corresponding to the multicast information.

A basic configuration of a multicast service providing system in the second embodiment is configured as shown in FIG. 5, same as the above-described embodiment, and, also, a radio base station is configured as shown in FIG. 6.

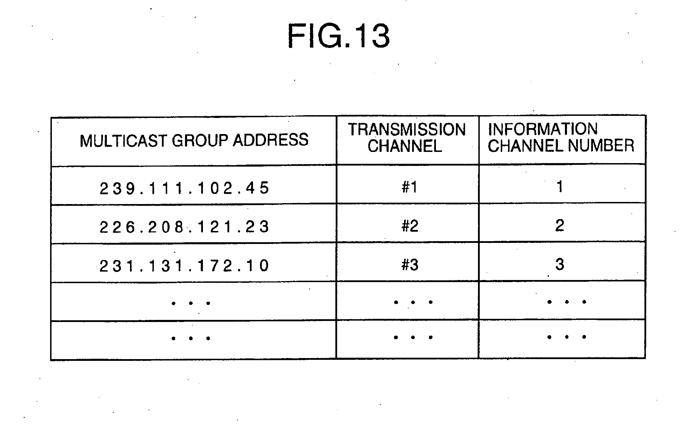

In the present invention embodiment, an information distribution control part 24 manages multicast service by a multicast information channel table as shown in FIG. 13. In this multicast information channel table, relationship between multicast group addresses for identifying multicast information channels for performing distribution services, transmission channels used for transmitting the multicast information corresponding to the respective multicast information channels, and information channel numbers managed by a radio base station 20 is described.

The multicast group addresses for identifying the multicast information channels for providing the distribution services are used for identifying the contents of distribution services, and, are the same as multicast addresses, for example, used by IGMP (Internet Group Management Protocol) which is the multicast protocol of IP (Internet Protocol) network. However, in case the radio base station 20 is connected with a network other than the IP network, any addresses which can be used for identifying servers and the networks providing the multicast services can be used as the multicast group addresses.

The transmission channels are expressed by channel identifiers by which the radio base station 20 and each radio terminal 10 can use for identification, and indicate channels for transmitting the multicast information corresponding to the multicast information channels. In case the access type is, for example, a time division multiple access type (TDMA), channel identifiers include time slot numbers in radio frames and frequency numbers. There may also be a system which requires neither frequencies nor time slots for identifying the radio channels, and a system which requires another identifiers. In such a case, any type of identifiers which are used for identifying the radio channels according to an identification method suitable for the system may be used.

In case transmission channels are changed according to a situation of channel allocation in a radio section between the radio base station 20 and each radio terminal, the item of the transmission channel of this multicast information channel table is updated.

An information channel number is a number which the radio base station 20 gives for a multicast group address.

The information channel numbers are numbers unique only to the service area Es of the radio base station 20, and, when the radio terminal 10 moves to another service area by handoff, etc., and connection switching to another radio base station is made, information channel numbers managed by the newly connected radio base station are used.

These information channel numbers correspond to the multicast group addresses, as described above, and may be used as the multicast information channels between the radio base station 20 and each radio terminal 10, i.e., simple identifiers for the contents of distribution services.

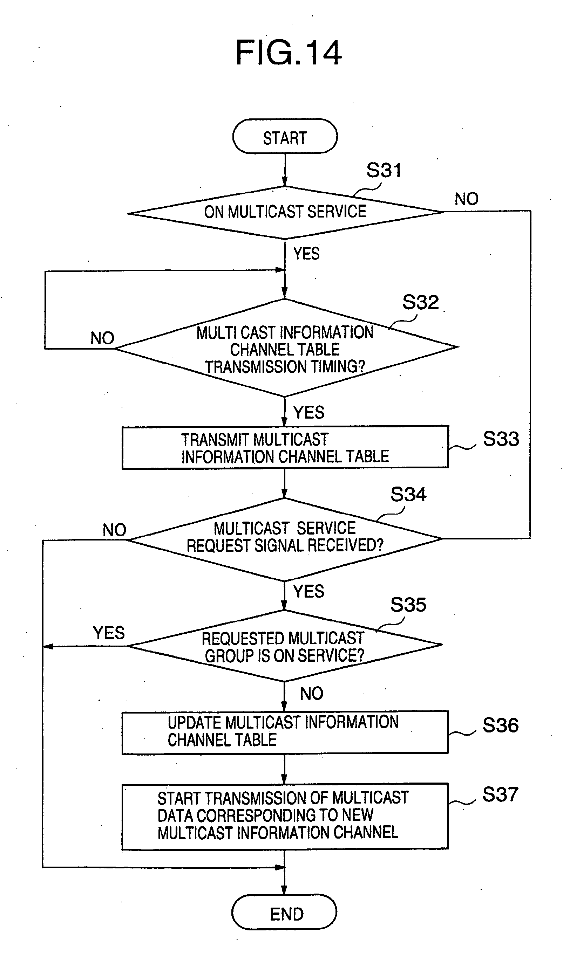

The radio base station 20 which provides the multicast services processes in accordance with a procedure shown in FIG. 14. This processing is mainly performed by the information distribution control part 24 of the radio base station 20.

The radio base station 20 enters one state of state of providing multicast service and a state of not doing so. In FIG. 14, it is determined whether the radio base station 20 is performing multicast service (S31). When the multicast service is performed (YES at S31), it is monitored whether it is a transmission timing for the multicast information channel table (see FIG. 13) which shows information concerning the multicast information channels under the service (S32), and, when it is the timing, the multicast information channel table is informed of to all the radio terminals 10 in the service area Es (S33).

Then, it is determined whether a multicast service request signal is received from anyone of the radio terminals 10 (S34). When the multicast service request signal is received by none of the radio terminals 10 (NO at S34), the series of processing is finished. After that, as long as the multicast service request signal from the radio terminal 10 is not received, processing (S31 through S34) described above is performed repeatedly. Consequently, each radio terminal 10 in the service area Es can know the contents of services distributed at the time, and the radio channels for receiving the contents of the services, by receiving the multicast information table transmitted from the radio base station 20.

The above-mentioned transmission (S33) of the multicast information table is made by using a radio channel which can be used by the radio base station 20. The radio channel which can be used should be a radio channel determined according to a channel allocation method which the radio base station 20 employs. The radio channel used for transmission of this multicast information channel table is informed of to each radio terminal 10 present in the service area Es from the radio base station 20 using a perch channel, for example. Each radio terminal 10 receives the multicast information table from the radio base station 20 using the informed radio channel.

In addition, it is also possible to transmit the multicast information channel table from the radio base station 20 periodically at fixed intervals. In this case, control information concerning the transmission period can also be informed of by using the perch channel.

Moreover, the radio channel used for transmission of the multicast information channel table may also be fixed. In this case, when the radio channel known between the radio base station 20 and each radio terminal 10 is previously fixed therebetween, it is not necessary to include the information concerning the radio channel used for transmission of the multicast information channel in the perch channel.

Returning to FIG. 14, in a state in which the radio base station 20 does not perform multicast service (NO at S31), or when, in the above-described process (S31 through S34), a multicast service request signal (including the above-mentioned multicast group address) is received by the radio base station 20 from the radio terminal which newly desires a service (YES at S34), the above-mentioned multicast information channel table (see FIG. 13) is referred to, and it is determined (S35) whether or not the service concerning the request has been already provided. When the service has been already provided (YES at S35), the series of processing is finished, and, the above-described processing (S31 through S34) is repeatedly performed, until a multicast service request signal is received subsequently.

When the service concerning the request has not been provided yet (NO at S35), the multicast information channel table is updated by newly registering into the multicast information channel table the multicast group address which identifies the multicast service concerning the request, the radio channel (transmission channel) used for the service, and an information channel therefor (S36). Then, the radio base station 20 starts transmission of the multicast information corresponding to the service concerning the above-mentioned request using the thus-determined radio channel (S37). After that, the above-described processing (S31 through S34) is performed repeatedly. In this process, the multicast information channel table updated as mentioned above is transmitted to each radio terminal 10 present in the service area Es from the radio base station 20 (S32, S33).

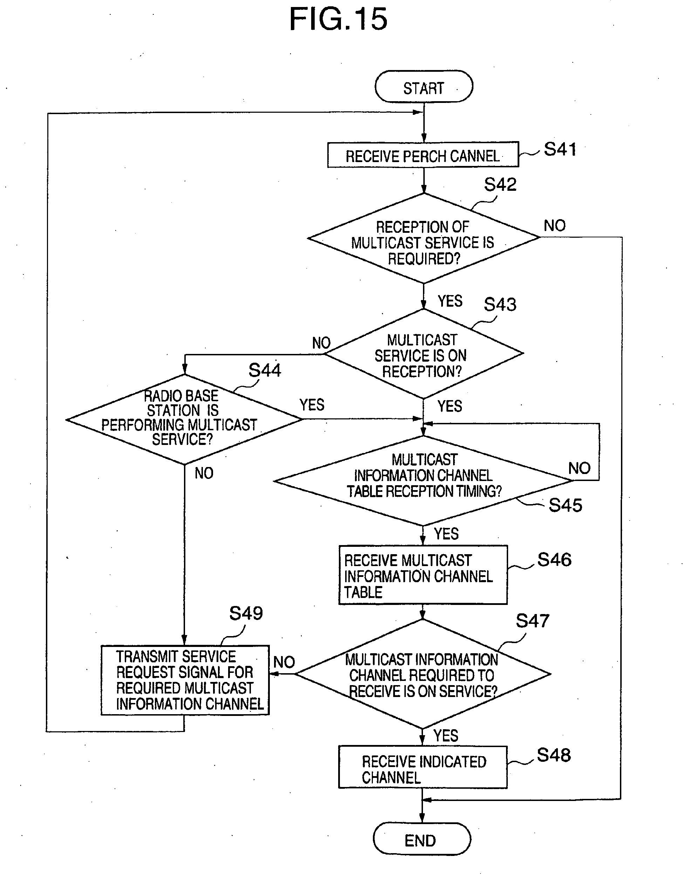

In the process in which the radio base station 20 performs processing in accordance with the above-described procedure, and provides the multicast services, each radio terminal 10 performs processing in accordance with a procedure shown in FIG. 15.

In FIG. 15, the radio terminal 10 receives the perch channel first (S41). The radio base station 20 transmits, by using this perch channel, various control information concerning the system, also, information indicating whether or not the radio base station 20 is providing multicast service, and, in case of providing the multicast service, transmits information concerning the radio channel used for transmitting the multicast information channel table, transmission period therefor, and so forth.

When reception of multicast service is desired by the radio terminal 10 (YES at S42), it is determined whether the own terminal has already received a certain multicast service from the radio base station 20 (S43). When the own terminal has not received multicast service from the radio base station 20 yet (NO at S43), it is determined whether, based on the information informed of by the above-mentioned perch channel, the radio base station 20 is providing multicast service (S44). When the radio base station 20 is providing multicast service (YES at S44), it is determined, based on the transmission period for the multicast information channel table informed of by the above-mentioned perch channel, whether or not it is a timing of receiving the multicast information channel table (S45). When it is the timing, the multicast information channel table transmitted from the radio base station 20 will be received (S46) using the radio channel informed of by the above-mentioned perch channel.

The radio terminal 10 determines whether or not the multicast information channel (multicast group) which the own terminal desires is registered in the multicast information table, when the multicast information channel table is received thereby (S47). When this multicast information channel desired is registered there (YES at S47), i.e., when distribution service of the desired multicast information has been already performed, the radio terminal 10 receives the distribution information (multicast information) of the multicast information channel using the transmission channel corresponding to the desired multicast information channel in the multicast information channel table (S48).

In the above-mentioned process, when the radio terminal 10 already receives some multicast service (YES at S43), while the above-mentioned service is received thereby, the distribution information of the multicast information channel concerning the relevant new request is received thereby by using the radio channel for receiving the multicast information according to the above-described procedure (S45 through S48).

On the other hand, when the radio base station 20 is not providing multicast service (NO at S44), or, when the radio base station 20 is providing multicast service, but is not providing a service of the desired multicast information channel (NO at S47), the radio terminal 10 transmits a multicast service request signal for the desired multicast information channel to the radio base station 20 (S49), and waits for the radio base station 20 to start the service of the desired multicast information channel. Then, when the multicast information channel table updated by this multicast service request signal (see S34 through S36 in FIG. 14) is received from the radio base station 20 (S46), the radio terminal 10 receives the distribution information of the new multicast information using the radio channel (transmission channel) specified by the multicast information channel table (S47, S48).

As mentioned above, since the radio terminal 10 receives the multicast information channel table from the radio base station 20 by the radio channel informed of by using the perch channel, even when the radio channel by which the multicast information channel table should be transmitted by the radio base station 20 changes, the radio terminal 10 can always receive the multicast information channel table. Moreover, even when the transmission channel by which the information of the multicast information channel (multicast information) is transmitted by the radio base station 20 is changed, since the change is reflected by the multicast information channel table, the radio terminal 10 can receive the distribution information of the desired multicast information channel by the radio channel specified in the relevant multicast information channel table.

In the processing according to the procedure shown in FIG. 15, when the radio terminal 10 does not desire multicast service (NO at S42), the series of processing is finished. Consequently, the radio terminal 10 which does not particularly desire multicast service continues the state of receiving the perch channel (S41, S42).

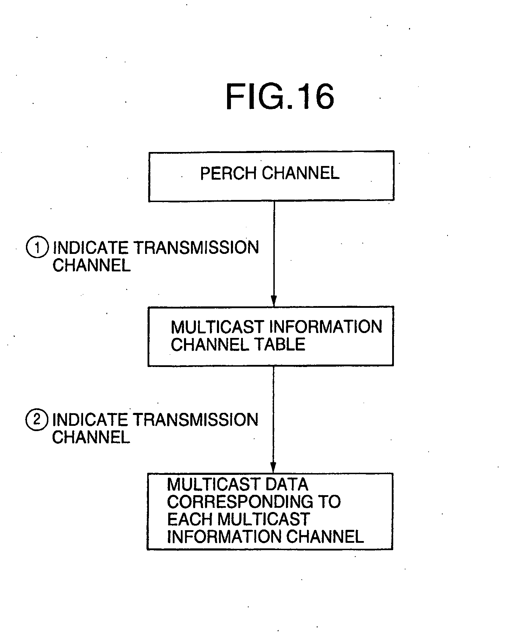

In the above-mentioned system, multicast information will be distributed to the radio terminal 10 from the radio base station 20 through the processing by the radio terminal 10 according to the procedure shown in the processing of FIG. 15 and the processing by the radio base station 20 according to the procedure shown in FIG. 14, as shown in FIG. 16.

That is, the multicast information channel table is transmitted to the radio terminal using the transmission channel ① informed of by the perch channel, and, further, the distribution information of the multicast information channel (multicast group) registered in the multicast information channel table is transmitted to the radio terminal 10 using the transmission channel ② registered in the multicast information channel table.

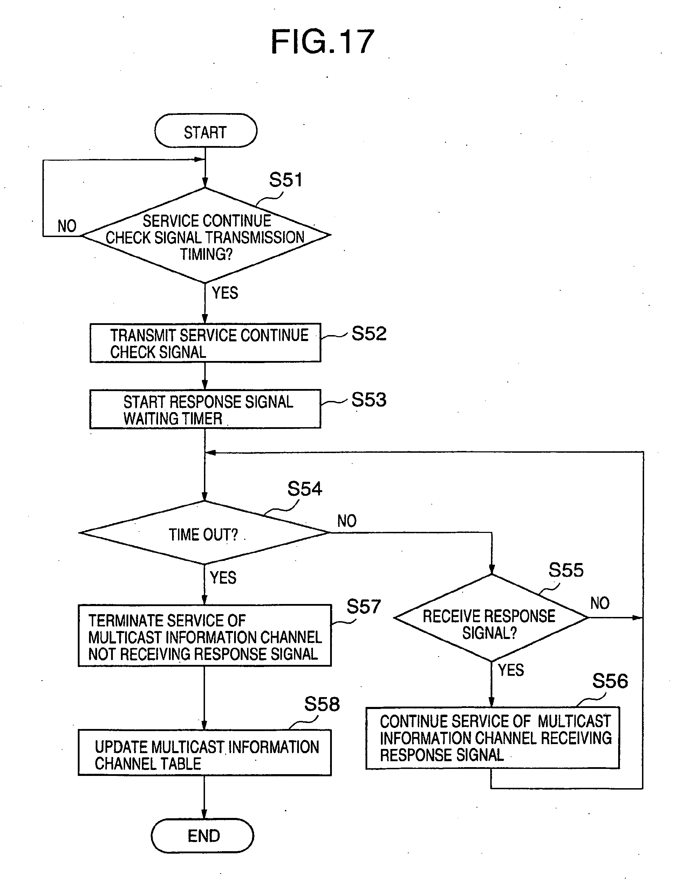

In the above system, during provision of the multicast service, when all the radio terminals that receive the multicast information corresponding to a multicast information channel in the service area Es stop desiring continuation of the relevant multicast service, the radio base station 20 which provides the multicast service processes according to the procedure shown in FIG. 17, for example, in order to stop the multicast service.

In this processing, a service continuation check signal corresponding to the flag state reset signal and a response signal corresponding to the service continuation request signal, described above for the first embodiment, are transmitted and received between the radio base station 20 and the radio terminal 10.

In FIG. 17, it is determined whether it is a timing of transmitting the service continuation check signal (S51). When it is determined that it is the transmitting timing for the service continuation check signal, the service continuation check signal is transmitted to each radio terminal 10 present in the service area Es from the radio base station 20 (S52). Then, a timer at which a response waiting time is set starts operation (S53). In this state, it is determined whether or not the response signal in response to the service continuation check signal is received from anyone of the radio terminals (S55), while it is determined whether or not the relevant timer has reached a time-out state (S54). There, when the response signal is received from any one of the radio terminals before the time-out of the above-mentioned timer, the radio base station 20 enters a state where distribution service of the multicast information channel concerning the response signal is continued (S56). Whenever it receives the response signal in response to the service continuation check signal for each service from the radio terminal until the above-mentioned timer reaches the time-out state, a state is entered where distribution service of the multicast information channel concerning the response signal is continued (S54, S55, S56).

On the other hand, when the above-mentioned timer reaches the time-out state (YES at S54), distribution service of the multicast information channel for which no response signal is returned in response to the service continuation check signal is terminated (S57). Then, the relevant multicast information channel table is updated by deleting the information concerning this terminated multicast information channel from the multicast information channel table (see FIG. 13) (S58).

Transmission of the above-mentioned service continuation check signal by the radio base station 20 can be performed as follows.

For example, in the perch channel, the multicast group address for which continuation of service is to be checked can be described as the service continuation check signal. In this case, the radio terminal receives the perch channel for every transmission period of this service continuation check signal.

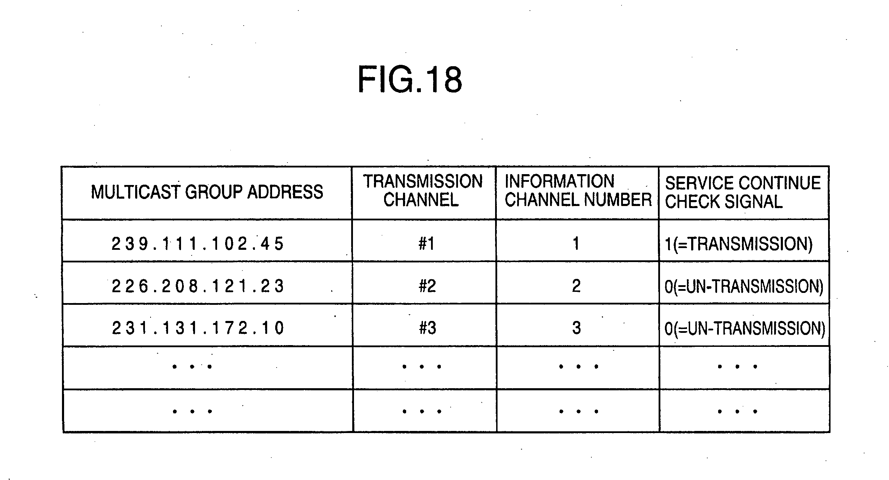

Moreover, the service continuation check signal can be transmitted using the same transmission channel as the transmission channel of the multicast information channel table. In this case, the service continuation check signal is transmitted at the same period as the transmission period of the multicast information channel table. Moreover, as shown in FIG. 18, in this case, a flag as the service continuation check signal can be included in the multicast information channel table. When the multicast information channel table is transmitted, the flag corresponding to the multicast group for which it is the timing for checking continuation of the service is set to "1", and the flag corresponding to the multicast group for which it is not the timing is reset into "0."

Thus, similar to the first embodiment, in case of transmitting to each radio terminal the multicast information channel table including the above-mentioned flag information as the service continuation check signal, when each radio terminal continues reception of the multicast information, it can be determined whether it is necessary to transmit the service continuation request signal, based on the state of the flag information.

Furthermore, the service continuation check signal can also be transmitted by using a different radio channel independently from the multicast information table. In this case, the transmission period of the service continuation check signal can also be set independently, for example, information of the transmission channel for this service continuation check signal is given by using the perch channel.

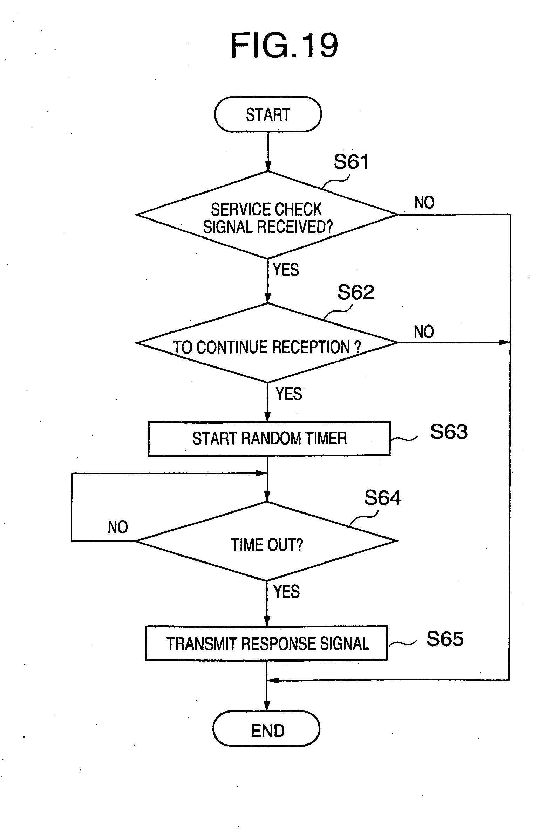

Each radio terminal which receives the service continuation check signal transmitted from the radio base station as mentioned above processes in accordance with a procedure shown in FIG. 19.

In FIG. 19, when the service check signal is received (YES at S61), in case continuation of the multicast service currently received is desired (YES at S62), the radio terminal starts a random timer in which a random time setting is possible (S63). Then, when the random timer by which the random time is set reaches a time-out state (YES at S64), a response signal is transmitted to the radio base station 20.

Even when the service continuation check signal transmitted from the radio base station 20 is a signal for a specific multicast information channel, even when it is a signal for all the multicast information channels under service by the radio base station 20, the identifies (multicast group addresses, information channel numbers or the like) for indicating all the multicast information channels for which service is desired are contained in the response signal.

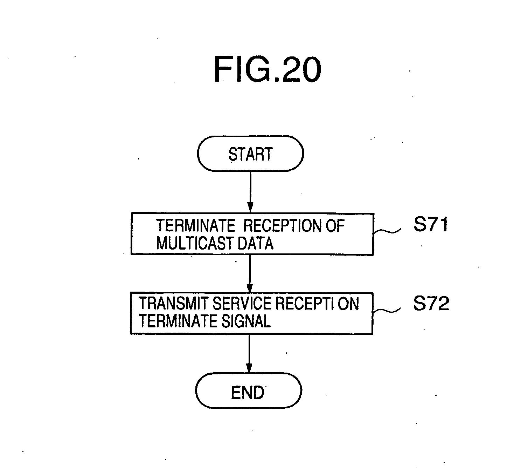

Furthermore, when the radio terminal which has received the multicast service positively terminates reception of the service, it processes in accordance with a procedure shown in FIG. 20. That is, reception of the multicast information corresponding to the multicast information channel transmitted from the radio base station 20 is interrupted (S71), and a service reception termination signal is transmitted to the radio base station 20 (S72). The identifiers (multicast group addresses, information channel numbers or the like) which indicate all the multicast information channels for which reception of service be terminated are included in this service reception termination signal.

The radio base station 20 which has received the service reception termination signal from any one of the radio terminals transmits a service continuation check signal for the multicast information channels indicated by the identifiers (multicast group addresses, information channel numbers or the like) contained in the service reception termination signal, to each radio terminal present in the service area Es, and determines the necessity of continuation of the service in accordance with the procedure shown in FIG. 17. Then, when no response signal is received from any of the radio terminals, the radio base station 20 terminates the service of these multicast information channels.

In the example described above, the control signals transmitted to the radio base station 20 from the radio terminal 10 are three, the service request signal, response signal, and service reception termination signal. These signals can be transmitted by a random access channel which is used for accessing the radio base station 20 first, at a time of turning on of the power supply of the radio terminal, or by using user data included in a packet or a control information transmission channel in case during uni-cast communication.

Moreover, in the above-described example, the time division multiple access type (TDMA) is used as an access type for downlink signals from the radio base station 20 to the radio terminal 10. However, a code division multiple access type (CDMA) is also applicable in the above-mentioned example, by a similar manner only by replacing the identifiers by spread codes, etc.

In addition, also in this embodiment, the radio base station 20 acts as an information distributing apparatus.

A third embodiment of the present invention will now be described.

According to this embodiment, in case a mobile set used as a radio terminal moves across service areas (in case of handoff) while receiving multicast distribution of information, switching of base station which acts as a distribution origin for the mobile set can be made smoothly.

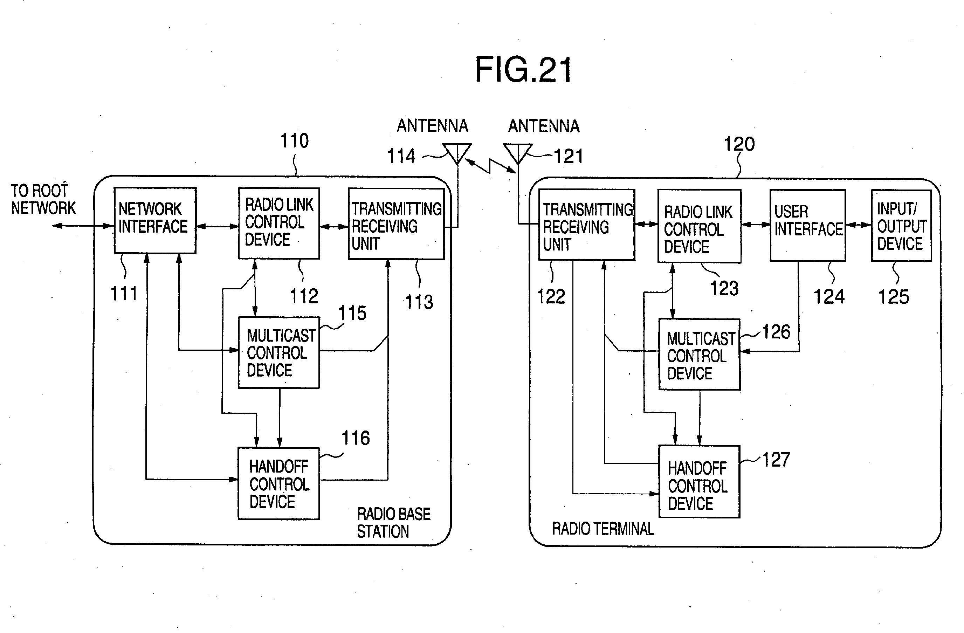

A system to which a multicast service providing method in the present embodiment is applied is configured as shown in FIG. 21.

The multicast service providing system shown in this figure includes a radio base station 110 and a radio terminal 120. The radio base station 110 transmits (distributes) information (multicast data) provided via a root network, such as an IP network, to the radio terminal 120 present in a radio area. The radio terminal 120 is, for example, a cellular phone, or a personal computer terminal (PC terminal) which has a telecommunication function, the radio terminal 120 receives multicast data distributed from the radio base station, and when a movement arises, the radio base station acting as the other party of communicative is rapidly switched.

The radio base station 110 has a network interface 111, a radio link control device 112, a transmitting/receiving unit 113, an antenna 114, a radio base station side multicast control device 115, a radio base station side handoff control device 116, and an input/output device 117.

The network interface 111 performs control concerning the third layer of OSI reference model. Specifically, when TCP/IP is used as a communication protocol, the network interface 111 performs composition/decomposition of IP packets, and extraction/insertion of multicast addresses.

The radio link control device 112 performs control concerning the second layer of OSI reference model. Specifically, the radio link control device 112 performs composition/decomposition of radio frames which include data channels to which multicast data is inserted, and various control channels; in a combined manner.

The transmitting/receiving unit 113 performs control concerning the first layer of OSI reference model. Specifically, the transmitting/receiving unit 113 transmits and receives radio signals by converting a base-band signal from the radio link control device 12 into radio signal, and transmitting it through the antenna 114 or converting a radio signal given through the antenna 114 into a base-band signal.

The radio base station side multicast control device 115 performs control for multicast cooperatively with a multicast control device of the radio terminal 120 described later. Moreover, the radio base station side multicast control device 115 produces a multicast management table which is information required in order that the radio terminal 120 can receive multicast data. Details of the multicast management table will be described later.

The radio base station side handoff control device 116 gives instructions of distribution of multicast data to the radio base station side multicast control device 115, and performs control of informing the radio terminal 120 of radio channels used for distributing the multicast data to the radio terminal 120. Specifically, based on multicast addresses obtained from the root network via the network interface, and/or information concerning link control obtained from the radio link control device 112, the radio base station side handoff control device 116 performs handoff control for the radio terminal to switch the radio base station acting as the other party of communication, and, also, gives radio channels used for the multicast to the transmitting/receiving unit 113.

Moreover, the radio base station side handoff control device 116 exchanges the multicast management table between the network interface 111 and a radio base station adjacent thereto via the root network connected with the network interface 111, and in order to inform the radio terminal 120 of the multicast management tables of the own station and the adjacent radio base station, it controls the radio link control device 112.

On the other hand, the radio terminal 120 has an antenna 121, a transmitting/receiving unit 122, a radio link control device 123, a user interface 124, an input/output device 125, a radio terminal side multicast control device 126, and a radio terminal side handoff control device 127.

The transmitting/receiving unit 122 and the radio link control device 123 perform operation equivalent to the transmitting/receiving unit 113 and the radio link control device 112 of the radio base station 110, respectively. However, the transmitting/receiving unit 122 also performs measurement of electric field intensity of a signal transmitted from the radio base station 110.

The user interface 124 terminates the TCP/IP protocol for the signal given from the radio link control device 123, and performs interface with an input/output device 125. The input/output device 125 outputs and inputs a sound, a picture, etc., and includes a display, a speaker, a microphone, various keyboards, an external connection terminals, etc.

The radio terminal side multicast control device 126 performs control for the multicast while communicating with the radio base station side multicast control device 115 via the radio link control device 123 based on the information acquired through the user interface 124.

The radio terminal side handoff control device 127 detects an opportunity of handoff, selects a radio base station to which a movement is made, performs request to the radio base station to which the movement is made for distribution of multicast data, and acquires the multicast management table.

Specifically, based on the information concerning electric field intensity obtained from the transmitting/receiving unit 122, and the information concerning the link control obtained from the radio link control device 123, the radio terminal side handoff control device 127 performs synchronization with the radio base station side handoff control device 116 and performs handoff. Moreover, the radio terminal side handoff control device 127 gives the radio channel used for multicast to the transmitting/receiving unit 122.

As embodiments realizing the above-mentioned functions will now be described. A first embodiment is such that the radio terminal requests to the radio base station for which the radio terminal moves, for distribution of multicast data, directly, or, via the radio base station at the movement origin, further acquires information for identifying the radio channel used for the multicast, so that switching of the radio base station which acts as the other party of communication at the time of movement can be made rapidly. A second embodiment is such that the radio base station informs the radio terminal of the multicast management table of the own station and also the multicast management table of an adjacent radio base station, the radio terminal previously determines multicast data which the radio base station on the movement destination distributes, and thus, the radio base station which acts as the other party of communication can be switched rapidly at the time of movement.

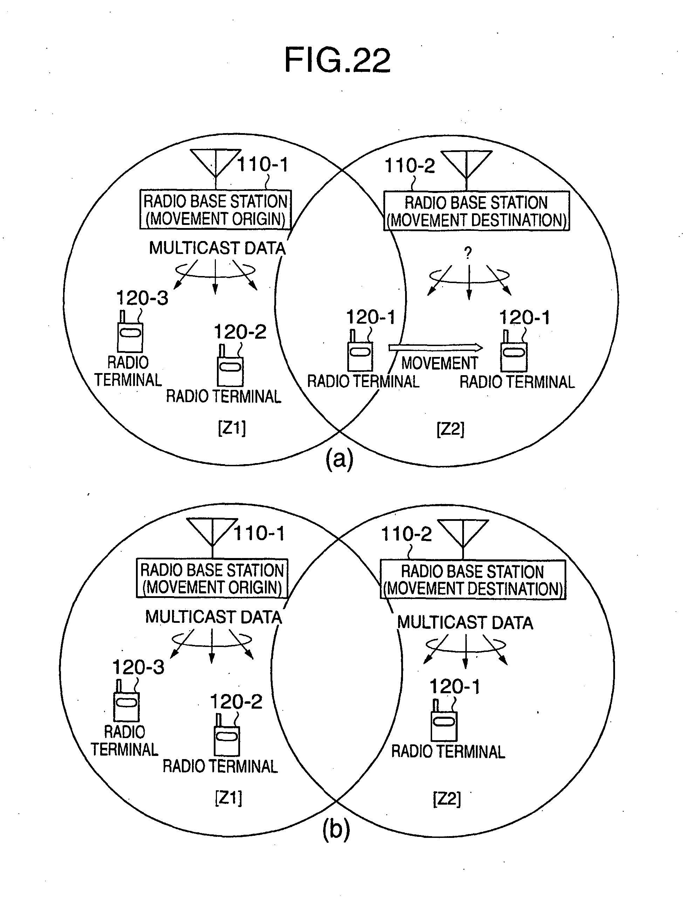

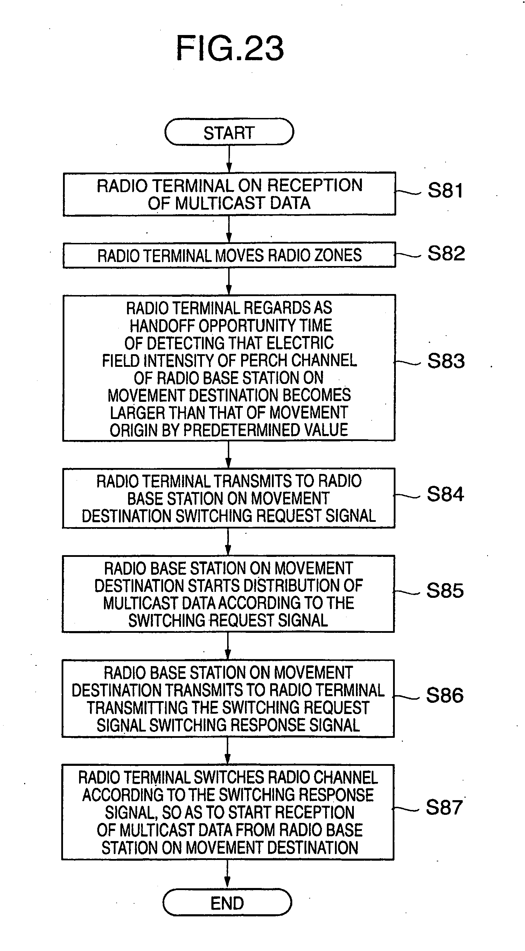

First, the first example of operation will now be described. FIG. 22 (a) and (b) shows a conceptual diagram, and FIG. 23 shows an operation flow of the first example of operation. It is assumed that, as shown in FIG. 22 (a), a radio terminal 120-1 in a radio zone Z1 of a radio base station 110-1 on movement origin moves to a radio zone Z2 of a radio base station 110-2 on movement destination, while receiving multicast data given by the radio base station 110-1 on movement origin.

In this case, as shown in the operation flow of FIG. 23, when the radio terminal 120-1 moves into the radio zone Z2 from the radio zone Z1 (S82) while receiving multicast data (S81), in the radio terminal 120-1, the signal reception intensity from the radio base station 110-2 on movement destination becomes larger than the signal reception intensity from the radio base station 110-1 on movement origin. At this time, the radio terminal side handoff control device 127 built in the radio terminal 120-1 determines (S83), as an opportunity of handoff, the time of the reception intensity of the perch channel from the radio base station 110-2 on movement destination becoming larger than the reception intensity of the perch channel from the radio base station 110-1 on movement origin, based on the reception intensity of the perch channel received periodically.

In case of the opportunity of handoff, the radio terminal side handoff control device 127 transmits a switching request signal for switching the radio base station to be communicated, from the radio base station 110-1 on movement origin to the radio base station 110-2 on movement destination, to the radio base station on movement destination via the radio link control device 123 (S84).

Information which indicates the radio base station 110-2 on movement destination determined from the electric field intensity, information which indicates multicast data which the radio terminal 120-1 desires to receive, information which indicates the radio terminal 120-1 of transmission origin, and so forth, are included in the switching request signal.

A random access channel which the radio base station 110-2 on movement destination which is a transmission origin provides is used for transmission of this switching request signal. Information concerning the random access channel can be acquired from the perch channel from the radio base station 110-2 on movement destination.

The radio base station side handoff control device 116 built in the radio base station 110-2 on movement destination receives the switching request signal from the radio terminal 110-1, and, when the multicast data indicated by the switching request signal is not distributed by the radio base station 110-2, it controls the radio base station side multicast control device 115 to newly distribute the multicast data. The radio base station side multicast control device 115 starts distribution of the multicast data which the radio terminal 120-1 desires to receive, under such control (S85). When the multicast data indicated by the switching request signal is already distributed by the radio base station 110-2, such control to the radio base station side multicast control device 115 by the radio base station side handoff control device 116 is not performed.

Furthermore, the radio base station side handoff control device 116 transmits, via the radio link control device 112, a switching response signal including information which indicates multicast data desired by the radio terminal 120-1 and started to be distributed or already distributed, and information indicating a radio channel used for distributing this multicast data, to the radio terminal 120-1 which has transmitted the switching request signal (S86). The radio terminal side handoff control device 127 built in the radio terminal 120-1 controls switching of the radio channel according to this switching response signal. Thereby, the radio terminal side handoff control device 127 starts reception of the multicast data from the radio base station 110-2 on movement destination (S87).

By the above-described series of operation, even when the radio terminal 120-1 moves into the radio zone Z2 of the radio base station 110-2 on movement destination from the radio zone Z1 of the radio base station 110-1 on movement origin, the radio base station to be communicated with can be quickly switched.

In S84 of the flow of operation shown in FIG. 23, the radio terminal 120-1 may transmit the switching request signal to the radio base station 110-1 on movement origin. Further, in order for the radio base station 110-2 to increase opportunities to receive the switching request signal so as to receive it positively, the radio terminal 120-1 may transmit the switching request signal to both the radio base station 110-1 on movement origin and radio base station 110-2 on movement destination.

When transmitting the switching request signal to the radio base station 110-1 on movement origin from the radio terminal, it is necessary to include information which indicates the radio base station 110-2 on movement destination in the switching request signal. In this case, when the radio base station 110-1 on movement origin receives the switching.request signal, the radio base station side handoff control device 116 built therein transfers the switching request signal to the radio base station 110-2 on movement destination via the network interface 110 and root network, according to the switching request signal. When the radio terminal 120-1 transmits the switching request signal to both the radio base station 110-1 on movement origin and the radio base station on movement destination, the radio base station 110-2 on movement destination needs to select one of the two received switching request signals. There is a method of selecting one having a lower bit error rate between those two received switching request signals as a specific method of selection.

Further, in order for the radio base station to increase opportunities to receive the switching request signal so as to receive it positively, after the radio terminal 120-1 transmits the switching request signal, when the switching response signal is not able to be received thereby even when a predetermined time has elapsed, the switching request signal may be transmitted again. Further, the radio terminal 120-1 may previously transmits the switching request signal several times. Furthermore, the radio terminal 120-1 may transmit the switching request signal several times, and, when the switching response signal is not able to be received thereby even when a predetermined time has elapsed after the several times of transmission, the switching request signal may transmitted again several times.

Thus, according to this example of operation, in case the radio terminal 120-1 moves across radio zones, by transmitting the distribution request to the radio base station 110-2 on movement destination, in response thereto, the radio base station 110-2 on movement destination transmits the multicast data, and the switching request signal including the information indicating this multicast data and information indicating the radio channel used for distributing the relevant multicast data. Thereby, the radio base station to be communicated with can be switch rapidly at the time of movement.

In this example of operation, when a plurality of radio terminals transmit the switching request signals simultaneously, in order to prevent that these signals collide, the radio terminal knows a timing of a multicast management table being informed of from the perch channel of the radio base station on movement destination, and, in case the multicast management table is inform of within a predetermined time, the radio terminal receives the multicast management table: Then, the radio terminal may transmit the switching request signal only when the contents of the multicast management table do not include the multicast data which it desires to continuously receive. On the other hand, in case the multicast data which it desires to receive continuously is included in the contents of the multicast management table, the radio terminal receives the multicast data in accordance with the contents, without transmitting the switching request signal.

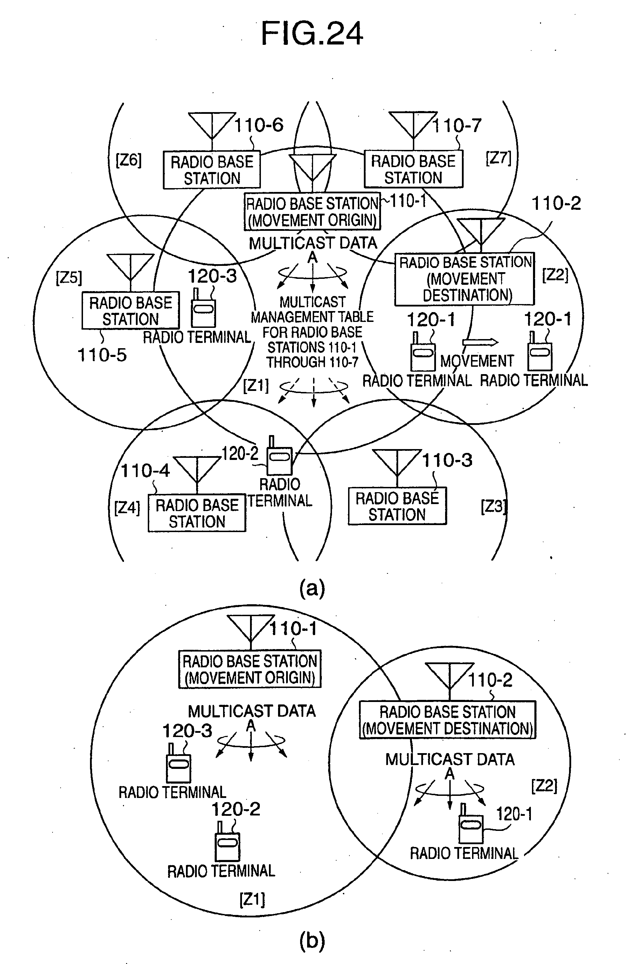

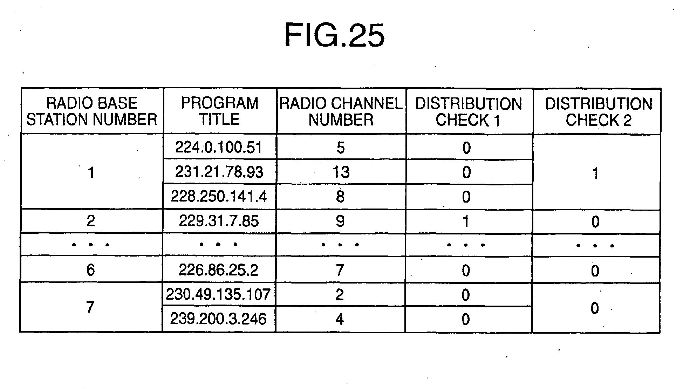

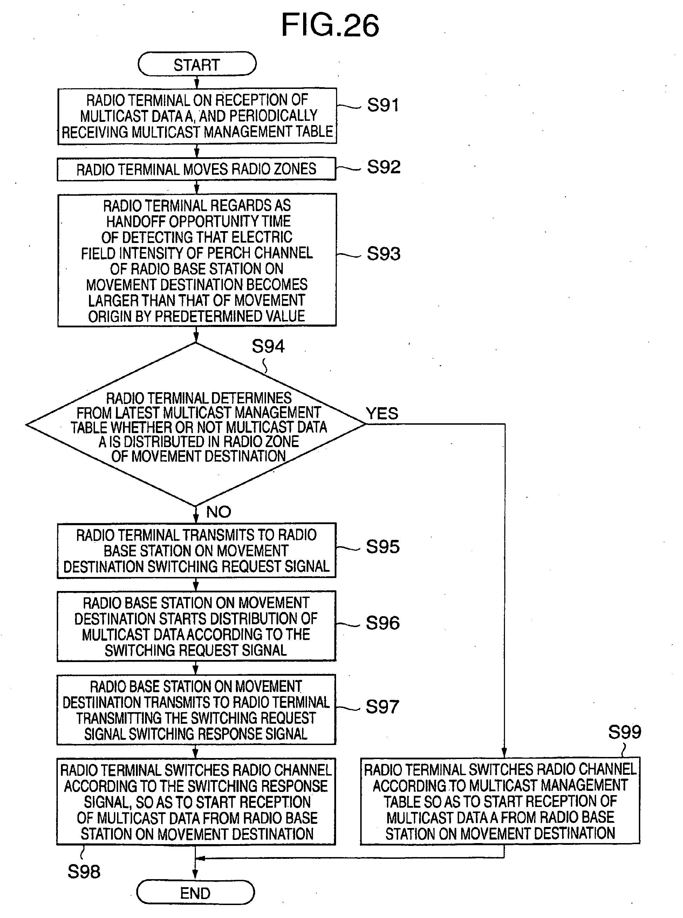

Next, the second example of operation will now be described. A conceptual diagram of the operation of the second example is shown in FIG. 24 (a) and (b). Moreover, an example of a multicast management table used in the operation example is shown in FIG. 25, and an example of an operation flow thereof is shown in FIG. 26.

First, the multicast management table used in this embodiment will now be described. In FIG. 24 (a), the radio base station 110-1 on movement origin receives information concerning multicast data distributed by radio base stations 110-2 through 110-7 adjacent to the own station from the relevant radio base stations 110-2 through 110-7, and, informs to a radio zone Z1 at a period $T_1$ the multicast management table including this information and information concerning multicast data distributed by the own station. The radio terminals 120-1 through 120-3 receive this information transmitted from the radio base station 110-1 on movement origin.

In the multicast management table shown in FIG. 25, the radio base station number on first column is information which indicates the radio base stations 110-1 through 110-7. The radio base station numbers 1 through 7 are related with the respective radio base stations 110-1 through 110-7. The program name on second column is information which indicates each multicast data. The IP address (multicast address) particular to a program name is related with each multicast data. In the example of FIG. 25, the radio base station 110-1 distributes three sorts of multicast data, and the radio base station 110-7 distributes two sorts of multicast data.

The radio channel number on third column is information identifying radio channels, such as a career frequencies, radio slots, and spread codes, used for distribution of the multicast data identified by the program names on second column. The particular radio channel number is related with each radio channel.

The distribution check 1 on fourth column and the distribution check 2 on fifth column are used in order that the radio base station 110 inquires for termination of distribution of multicast data to the radio terminals 120 present in the radio zone on the own station.

Specifically, when multicast data which becomes unnecessary to distribute is included in multicast data distributed from the radio base station 110, the radio terminal 120 transmits a distribution unnecessary notice including information which indicates the multicast data which became unnecessary for the radio base station 110. In order to inquire for permission of distribution termination to the radio terminals 120 present in the radio zone on the own station, the radio base station 110 which has received the distribution unnecessary notice informs the multicast management table in which the value on the distribution check 1 for the multicast data indicated by the distribution unnecessary notice is set as "1", and the values on the distribution check 1 for the other multicast data are set as "0".

When the value on the distribution check 1 for the multicast data which is under reception by itself is "1" in the received multicast management table, the radio terminal 120 sets any value within a predetermined time in a random timer, and, at a timing at which the random timer reaches the time-out state, transmits a response signal including information which indicates the multicast data under reception to the radio base station 110.

When receiving the response signal within a predetermined response interval, the radio base station 110 continues distribution of the multicast data corresponding to the response signal, i.e., continues distribution of the multicast data for which the value "1" is set on the distribution check 1, but terminates the distribution when not receiving the response signal therefor.

There is a case the radio base station 110 cannot receive the distribution unnecessary notice from the radio terminal 120 due to degradation of propagation environment, power supply termination on the radio terminal, or the like. In this case, distribution of unnecessary multicast data is continued and thus effective use of the radio resources cannot be attained. Therefore, the radio base station 110 inquires for permission of distribution termination to the radio terminals 120 present in the radio zone for all the multicast data distributed thereby.

Specifically, the radio base station 110 informs the multicast data in which the value on the distribution check 2 is set as "1" at period Tq which is N times the period Tt of informing of the multicast management table. When the value on the distribution check 2 of the received multicast data is "1" and, also, the multicast data is under reception thereby, the radio terminal 120 sets any value shorter than Tq in a random timer, and, at a timing at which the random timer reaches the time-out state, transmits a response signal including information indicating the multicast data which is under reception thereby.

The radio base station 110 continues distribution for the multicast data indicated by the response signal until the subsequent period Tq has elapsed. On the other hand, when the subsequent period Tq has elapsed from the notice of the multicast data for which the value on the distribution check 2 is set as "1", the radio base station 10 terminates distribution of the multicast data for which no indication has been made until then.

The multicast management table shown in FIG. 25 is produced by the radio base station side handoff control device 116 built in the radio base station 110 periodically transmitting and receiving the multicast management table with the adjacent radio base stations 110 via the network interface 11, and inserting in the multicast management table on the own station the thus-obtained multicast management tables on the adjacent radio base stations 110.

Next, specific operation will now be described. As shown in FIG. 24 (a), it is assumed that a radio terminal 120-1 in a radio zone Z1 of a radio base station 110-1 on movement origin moves to a radio zone Z1 of a radio base station 110-2 on movement destination.

In this case, as shown in the operation flow of FIG. 26, while the radio terminal 120-1 receives the multicast data A and also receives the multicast management table at a period Tt (S91), it moves into the radio zone Z2 from the radio zone Z1 (S92), in the radio terminal 120-1, the signal reception intensity from the radio base station 110-2 on movement destination becomes larger than the signal reception intensity from the radio base station 110-1 on movement origin. At this time, the radio terminal side handoff control device 127 built in the radio terminal 120-1 determines (S93), as an opportunity of handoff, the time of the reception intensity of the perch channel from the radio base station 110-2 on movement destination becoming larger than the reception intensity of the perch channel from the radio base station 110-1 on movement origin, based on the reception intensity of the perch channel received periodically.

In case of the opportunity of handoff, the radio terminal side handoff control device 127 refers to the latest multicast management table, and determines as to whether or not the multicast data A under reception thereby is distributed into the radio zone Z2 on the radio base station 110-2 on movement destination.

When the multicast data A under reception thereby is not distributed into the radio zone Z2 (NO at S94), the radio terminal side handoff control device 127 transmits a switching request signal for switching the radio base station to be communicated from the radio base station 110-1 on movement origin to the radio base station 110-2 on movement destination to the radio base station on movement destination via the radio link control device 123 (S95). At this time, the radio terminal side handoff control device 127 may transmit the switching request signal directly to the radio base station 110-2 on movement destination, or to the radio base station 110-2 on movement destination via the radio base station 110-1 on movement origin.

As shown in FIG. 24 (b), the radio base station side handoff control device 116 built in the radio base station 110-2 on movement destination receives the switching request signal from the radio terminal 110-1, and, controls the radio base station side multicast control device 115 on the own station so as to distribute the multicast data A, according to the switching request signal. Under the control, the radio base station side multicast control device 115 starts distribution of the multicast data A (S96). Furthermore, the radio base station side handoff control device 116 transmits a switching response signal to the radio terminal 120-1 which has transmitted the switching request signal, via the radio link control device 112 (S97).

The radio terminal side handoff control device 127 built in the radio terminal 120-1 controls switching of the radio channel according to this switching response signal. Thereby, the radio terminal side handoff control device 127 starts reception of the multicast data A from the radio base station 110-2 on movement destination (S98).

Further, when the multicast data A under reception is distributed into the radio zone Z2 (YES at S94), the radio terminal side handoff control device 127 built in the radio terminal 120-1 controls switching of the radio channel according to the multicast management table. Thereby, the radio terminal side handoff control device 127 starts reception of the multicast data A from the radio base station 110-2 on movement destination (S99).

By the series of operation described above, even when the radio terminal 120-1 moves into the radio zone Z2 on the radio base station 110-2 on movement destination from the radio zone Z1 on the radio base station 110-1 on movement origin, the radio base station to be communicated with can be rapidly switched.

Further, same as in the first embodiment, in S95 of the operation flow shown in FIG. 26, the radio terminal 120-1 may transmit the switching request signal to the radio base station 110-1 on movement origin. Further, the radio terminal 120-1 may transmit the switching request signal to both the radio base station 110-1 on movement origin and the radio base station 110-2 on movement destination.

Further, after the radio terminal 120-1 transmits the switching request signal, when the switching response signal is not able to be received even when a predetermined time has elapsed, the switching request signal may be transmitted again. Further, the radio terminal 120-1 may previously transmits the switching request signal several times. Furthermore, the radio terminal 120-1 may transmit the switching request signal several times, and, when the switching response signal is not able to be received even when a predetermined time has elapsed after the several times of transmission, the switching request signal may transmitted again several times.

Thus, according to this example of operation, in case the radio terminal 120-1 moves across radio zones, information concerning the multicast data which the radio base station 110-2 on movement destination distributes is included in the multicast management table informed of from the radio base station 110-1 on movement.origin. Thereby, the radio terminal 120-1 can previously recognize the multicast data which the radio base station 110-2 on movement destination distributes, and it receives the multicast data immediately without transmitting the distribution request, in case the radio base station 110-2 on movement destination distributes the desired multicast data. Accordingly, the radio terminal 120-1 can rapidly switch the radio base station to be communicated with at a time of movement.

Thus, according to the present invention, a radio terminal can determine whether or not to transmit a service continuation request signal to an information distributing apparatus based on informational indicating as to whether continuation request having been made for multicast information distribution service. Moreover, an information distributing apparatus can determine whether or not multicast information distribution service should be continued, based on a management state of service continuation management means. Thereby, the information distributing apparatus can provide multicast information distribution service properly via a radio section to radio terminals present within the service area.

Moreover, according to the present invention, radio channels used for multicast information distribution service can be limited only to radio channels which are informed of by an information distributing apparatus. Further, distribution services made by these radio channels can be limited only to multicast information corresponding to the radio channels informed of. Accordingly, it is possible to utilize the radio resources effectively, and, also, each radio terminal can receive only the necessary multicast information distribution services.

Furthermore, according to the present invention, in case necessity arises for a radio terminal to switch the other party to be communicated, from a radio base station on movement origin to a radio base station on movement destination, information of a radio channel used for distributing multicast data is transmitted from the radio base station on movement destination to the radio terminal, only as a result of the radio terminal transmitting a distribution request to the radio base station on movement destination. Thereby, it is possible to rapidly switch the radio base station to be communicated with at a time of movement, more rapidly than the prior art.

## Claims

1. A multicast service providing system in an IP network for performing a multicast information distribution service to a radio terminal (10) present within a service area via a radio section from an information distributing apparatus (20), wherein:

   said radio terminal has service continuation requesting means adapted to transmit to said information distributing apparatus a service continuation request signal for requesting continuation of multicast information distribution service, said service continuation request signal comprising a message wherein the absence of transmission of said message would lead to a termination of the multicast information distribution service;
said information distributing apparatus has service continuation management means (24) adapted to manage as to whether or not the above-mentioned request for service continuation from the radio terminal for the multicast information distribution service has been made; and
**characterised in that** said information distributing apparatus is adapted to transmit to said radio terminal information managed by the service continuation management means indicating whether or not the continuation request for the multicast information distribution service has been made.

2. The multicast service providing system as claimed in claim 1, wherein;
said service management means has management state resetting means adapted to reset a management state thereof into a state that no request for continuation of service for the multicast information distribution service from the radio terminal has been made.

3. The multicast service providing system as claimed in claim 2, wherein:

said management state resetting means performs a resetting operation for the management state every predetermined period.

4. The multicast service providing system as claimed in claim 2 or 3, wherein:

said radio terminal has continuation request control means adapted to perform a control such that, when the information indicating whether or not continuation request for the multicast information distribution service has been made is transmitted from the information distribution apparatus indicating a state that the request has not been made, the service continuation requesting means is adapted to transmit the service continuation request signal to the information distributing apparatus.

5. The multicast service providing system as claimed in claim 4, wherein:

said continuation request control means is adapted to control said service continuation requesting means so that the service continuation request signal is transmitted after a first random time has elapsed since the information indicating the state that no continuation request has been made for the multicast information distribution service was received from said information distributing apparatus.

6. The multicast service providing system as claimed in claim 4 or 5, wherein:

said radio terminal has re-transmission control means adapted to perform a control such that said service continuation requesting means re-transmits the service continuation request signal to said information distributing apparatus when the information indicating as to whether or not continuation request has been made for the multicast information distribution service has not been changed into information indicating that the request has been made within a predetermined time after the service continuation requesting means transmitted the service continuation request signal.

7. The multicast service providing system as claimed in claim 6, wherein:

said re-transmission control means is adapted to control said service continuation requesting means so that the service continuation request signal is transmitted again after a second random time has elapsed after the predetermined time had elapsed since said service continuation requesting means transmitted the service continuation request signal.

8. The multicast service providing system as claimed in claim 6 or 7, wherein:

a setting is made such that a time taken since the above-mentioned management state resetting means reset the management state of the service request management means into a state that no request for continuation of service for the multicast information distribution service has been made, until the above-mentioned service continuation request means re-transmits the service continuation request signal, be shorter than a time taken since the above-mentioned management state was reset to the state that continuation for a service has not been made from the radio terminal for the multicast information distribution service until the resetting is made subsequently.

9. The multicast service providing system as claimed in any of claims 1 through 8, wherein:

said service continuation management means is adapted to manage as to whether or not continuation request has been made for the multicast information distribution service by using a flag which is made to be ON when the service continuation request signal is received from the radio terminal.

10. A multicast service providing method for an IP network, wherein:

when an information distributing apparatus (20) performs multicast information distribution service to a radio terminal (10) present within a service area via a radio section, the method **characterised in that** said information distributing apparatus manages as to whether or not a request for service continuation from the radio terminal for the multicast information distribution service has been made, said service continuation request comprising a message wherein the absence of transmission of said message would lead to a termination of the multicast information distribution service, and said information distributing apparatus also transmits thus-managed information indicating whether or not the continuation request for the multicast information distribution service management has been made to the radio terminals, and said radio terminal transmits a service continuation request signal to said information distributing apparatus when the information transmitted from the information distributing apparatus indicating whether or not service continuation request has been made by said radio terminal for the multicast information distribution service indicates a state that the request has not been made.

11. The multicast service providing method as claimed in claim 10, wherein:

the management state as to whether or not continuation request has been made for the multicast information distribution service from the radio terminal is reset to a state that no continuation request for the multicast information distribution service has been made from the radio terminal, periodically.

12. The multicast service providing method as claimed in claim 10 or 11, wherein:

when the information indicating whether or not continuation request has been made for the multicast information distribution service is not changed into a state that the request has been made within a predetermined time after the radio terminal transmitted the service continuation request signal, the service continuation request signal is transmitted to the information distributing apparatus again.

13. An information distributing apparatus (20) adapted to perform a multicast information distribution service in an IP network via a radio section to a radio terminal (10) present within a service area, the information distributing apparatus comprising:

service continuation management means adapted to manage as to whether or not a service continuation request has been made by the radio terminal for the multicast information distribution service, said service continuation request comprising a message wherein the absence of transmission of said message would lead to a termination of the multicast information distribution service, **characterised in that** said information distributing apparatus (20) is adapted to transmit to the radio terminal information managed by said service continuation management means indicating whether or not a continuation request for the multicast information distribution service has been made.

14. The information distributing apparatus as claimed in claim 13, wherein:

the service continuation management means has management state resetting means adapted to reset the management state into a state that no service continuation request has been made by the radio terminal for the multicast information distribution service.

15. The information distributing apparatus as claimed in claim 14, wherein:

said management state resetting means performs the resetting operation every predetermined period.

16. A radio terminal (10) adapted to receive a multicast information distribution service in an IP network from an information distributing apparatus via a radio section, the radio terminal comprising:

service continuation request means adapted to transmit a service continuation request signal for requesting provision of the multicast information distribution service to the information distributing apparatus, said service continuation request signal comprising a message wherein the absence of transmission of said message would lead to a termination of the multicast information distribution service; and

**characterised by** continuation request control means adapted to control said service continuation request means so as to cause it to transmit the service continuation request signal to the information distributing apparatus when information indicating whether or not service continuation request has been made by the radio terminal for the multicast information distribution service, transmitted by the information distributing apparatus which manages as to whether or not the service continuation request has been made by the radio terminal for the multicast information distribution service, indicates a state that the request has not been made.

17. The radio terminal as claimed in claim 16, comprising re-transmission control means adapted to control the service continuation request means so that the service continuation request means re-transmits the service continuation request signal to the information distributing apparatus, when the information indicating whether or not service continuation request has been made by the radio terminal for the multicast information distribution service has not been changed into a state that the request has been made within a predetermined time after the service continuation request means transmitted the service continuation request signal.

**Patentansprüche**

1. Mehrfachsendedienst-Bereitstellungssystem in einem IP-Netzwerk zum Durchführen eines Mehrfachsende-Informationsverteilungsdiensts zu einem Funkendgerät (10), welches innerhalb eines Dienstbereichs vorhanden ist, über einen Funkabschnitt von einer Informationsverteilungsvorrichtung (20), wobei:

   das Funkendgerät eine Dienstfortsetzungs-Anforderungseinrichtung hat, die angepasst ist, zur Informationsverteilungsvorrichtung ein Dienstfortsetzungs-Anforderungssignal zu übertragen, um Fortsetzung des Mehrfachsende-Informationsverteilungsdiensts anzufordern, wobei das Dienstfortsetzungs-Anforderungssignal eine Nachricht umfasst, wobei das Nichtvorhandensein von Übertragung der Nachricht zu einer Beendigung des Mehrfachsende-Informationsverteilungsdiensts führen würde;
   die Informationsverteilungsvorrichtung eine Dienstfortsetzungs-Verwaltungseinrichtung (24) hat, die eingerichtet ist, zu verwalten, ob oder nicht die oben erwähnte Anforderung auf Dienstfortsetzung von dem Funkendgerät für den Mehrfachsende-Informationsverteilungsdienst gemacht wurde; und
   **dadurch gekennzeichnet ist, dass** die Informationsverteilungsvorrichtung eingerichtet ist, zum Funkendgerät Information zu übertragen, welche durch die Dienstfortsetzungs-Verwaltungseinrichtung verwaltet wurde, welche zeigt, ob oder nicht die Fortsetzungsanforderung für den Mehrfachsende-Informationsverteilungsdienst gemacht wurde.

2. Mehrfachsendedienst-Bereitstellungssystem nach Anspruch 1, wobei:

   die Dienstverwaltungseinrichtung eine Verwaltungsstatus-Rücksetzeinrichtung hat, die eingerichtet ist, ihren Verwaltungszustand in einen Zustand zurückzusetzen, wo keine Anforderung auf Fortsetzung des Dienstes für den Mehrfachsende-Informationsverteilungsdienst von dem Funkendgerät getätigt wurde.

3. Mehrfachsendedienst-Bereitstellungssystem nach Anspruch 2, wobei:

   die Verwaltungszustand-Rücksetzeinrichtung einen Rücksetzbetrieb für den Verwaltungszustand jede vorher festgelegte Periode durchführt.

4. Mehrfachsendedienst-Bereitstellungssystem nach Anspruch 2 oder 3, wobei:

   das Funkendgerät eine Fortsetzungsanforderungs-Steuerungseinrichtung hat, welche eingerichtet ist, eine Steuerung durchzuführen, so dass, wenn die Information, die zeigt, ob oder nicht Fortsetzungsanforderung nach dem Mehrfachsende-Informationsverteilungsdienst gemacht wurde, von der Informationsverteilungsvorrichtung übertragen wird, welche einen Zustand zeigt, dass die Anforderung nicht getätigt wurde, die Dienstfortsetzungs-Anforderungseinrichtung eingerichtet ist, das Dienstfortsetzungs-Anforderungssignal zur Informationsverteilungsvorrichtung zu übertragen.

5. Mehrfachsendedienst-Bereitstellungssystem nach Anspruch 4, wobei:

die Fortsetzungsanforderungs-Steuerungseinrichtung eingerichtet ist, die Dienstfortsetzungs-Anforderungseinrichtung zu steuern, so dass das Dienstfortsetzungs-Anforderungssignal übertragen wird, nachdem eine erste Zufallszeit seit der Information abgelaufen ist, welche den Zustand zeigt, dass keine Fortsetzungsanforderung, die für den Mehrfachsende-Infonnationsverteilungsdienst gemacht wurde, von der Informationsverteilungsvorrichtung empfangen wurde.

6. Mehrfachsendedienst-Bereitstellungssystem nach Anspruch 4 oder 5, wobei:

das Funkendgerät eine Zurückübertragungs-Steuereinrichtung hat, die eingerichtet ist, eine Steuerung durchzuführen, so dass die Dienstfortsetzungs-Anforderungseinrichtung das Dienstfortsetzungs-Anforderungssignal zur Informationsverteilungsvorrichtung zurück überträgt, wenn die Information, welche zeigt, ob oder nicht Fortsetzungsanforderung für den Mehrfachsendedienst-Informationsverteilungsdienst gemacht wurde, in Information geändert wurde, die zeigt, dass die Anforderung innerhalb einer vorher bestimmten Zeit getätigt wurde, nachdem die Dienstfortsetzungs-Anforderungseinrichtung das Dienstfortsetzungs-Anforderungssignal übertragen hat.

7. Mehrfachsendedienst-Bereitstellungssystem nach Anspruch 6, wobei:

die Zurückübertragungs-Steuereinrichtung eingerichtet ist, die Dienstfortsetzungs-Anforderungseinrichtung zu steuern, so dass das Dienstfortsetzungs-Anforderungssignal wiederum übertragen wird, nachdem eine zweite Zufallszeit abgelaufen ist, nachdem die vorher festgelegte Zeit abgelaufen ist, seitdem die Dienstfortsetzungs-Anforderungseinrichtung das Dienstfortsetzungs-Anforderungssignal übertragen hat.

8. Mehrfachsendedienst-Bereitstellungssystem nach Anspruch 6 oder 7, wobei:

eine Einstellung getätigt wird, so dass eine Zeit, die genommen wird, seitdem die oben erwähnte Verwaltungszustand-Einstellungseinrichtung den Verwaltungszustand der Dienstanforderungs-Verwaltungseinrichtung in einem Zustand zurückgesetzt hat, wo keine Anforderung auf Fortsetzung des Dienstes nach dem Mehrfachsende-Informationsverteilungsdienst gemacht wurde, bis die oben erwähnte Dienstfortsetzungs-Anforderungseinrichtung das Dienstfortsetzungs-Anforderungssignal zurückübertragen hat, kürzer ist als eine Zeit, die genommen wird, seitdem der oben erwähnte Verwaltungszustand auf den Zustand zurückgesetzt wurde, wo Fortsetzung auf einen Dienst nicht von dem Funkendgerät für den Mehrfachsende-Informationsverteilungsdienst getätigt wurde, bis das Zurücksetzen nachfolgend getätigt ist.

9. Mehrfachsendedienst-Bereitstellungssystem nach einem der Ansprüche 1 bis 8, wobei:

die Dienstfortsetzungs-Verwaltungseinrichtung eingerichtet ist, zu verwalten, ob oder nicht Fortsetzungsanforderung für den Mehrfachsende-Informationsverteilungsdienst getätigt wurde, unter Verwendung eines Flags, welches auf EIN gestellt wird, wenn das Dienstfortsetzungs-Anforderungssignal vom Funkendgerät empfangen wird.

10. Mehrfachsendedienst-Bereitstellungsverfahren für ein IP-Netzwerk, wobei:

wenn eine Informationsverteilungsvomichtung (20) Mehrfachinformations-Verteilungsdienst zu einem Funkendgerät (10), welches innerhalb eines Dienstbereichs vorhanden ist, über einen Funkabschnitt durchführt,
das Verfahren **dadurch gekennzeichnet ist, dass** die Informationsverteilungsvorrichtung verwaltet, ob oder nicht eine Anforderung auf Dienstfortsetzung von dem Funkendgerät für den Mehrfachsende-Informationsverteilungsdienst gemacht wurde, wobei die Dienstfortsetzungs-Anforderung eine Nachricht umfasst, wobei das Nichtvorhandensein von Übertragung der Nachricht zu einer Beendigung des Mehrfachsende-Informationsverteilungsdienst führen würde, und die Informationsverteilungsvorrichtung ebenfalls derart verwaltete Information, die zeigt, ob oder nicht die Fortsetzungsanforderung für die Informationsverteilungs-Dienstverwaltung gemacht wurde, zu den Funkendgeräten überträgt, und
das Funkendgerät ein Dienstfortsetzungs-Anforderungssignal zur Informationsverteilungsvorrichtung überträgt, wenn die Information, welche von der Informationsverteilungsvorrichtung übertragen wird, welche zeigt, ob oder nicht Dienstfortsetzungs-Anforderung durch das Funkendgerät für den Mehrfachsende-Informationsverteilungsdienst getätigt wurde, einen Zustand zeigt, dass die Anforderung nicht gemacht wurde.

**11.** Mehrfachsendedienst-Bereitstellungsverfahren nach Anspruch 10, wobei:

der Verwaltungszustand, ob oder nicht Fortsetzungsanforderung für den Mehrfachsende-Informationsverteilungsdienst vom Funkendgerät getätigt wurde, periodisch in einen Zustand zurückgesetzt wird, wo keine Fortsetzungsanforderung für den Mehrfachsende-Informationsverteilungsdienst von dem Funkendgerät gemacht wurde.

**12.** Mehrfachsendedienst-Bereitstellungsverfahren nach Anspruch 10 oder 11, wobei:

wenn die Information, die zeigt, ob oder nicht Fortsetzungsanforderung für den Mehrfachsende-Informationsverteilungsdienst getätigt wurde, nicht in einen Zustand geändert wurde, wo die Anforderung innerhalb einer vorgegebenen Zeit gemacht wurde, nachdem das Funkendgerät das Dienstfortsetzungs-Anforderungssignal übertragen hat, das Dienstfortsetzungs-Anforderungssignal wiederum zur Informationsverteilungsvorrichtung übertragen wird.

**13.** Informationsverteilungsvorrichtung (20), die eingerichtet ist, einen Mehrfachsende-Informationsverteilungsdienst in einem IP-Netzwerk durchzuführen, über einen Funkabschnitt zu einem Funkendgerät (10), welches innerhalb eines Dienstbereichs vorhanden ist, wobei die Informationsverteilungsvorrichtung umfasst:

eine Dienstfortsetzungs-Verwaltungseinrichtung, die eingerichtet ist, zu verwalten, ob oder nicht eine Dienstfortsetzungs-Anforderung durch das Funkendgerät für den Mehrfachsende-Informationsverteilungsdienst gemacht wurde, wobei die Dienstfortsetzungs-Anforderung eine Nachricht umfasst, wo das Nichtvorhandensein von Übertragung der Information zu einer Beendigung des Mehrfachsende-Informationsverteilungsdiensts führen würde,
**dadurch gekennzeichnet, dass** die Informationsverteilungsvorrichtung (20) eingerichtet ist, Information zum Funkendgerät zu übertragen, welche durch die Dienstfortsetzungs-Verwaltungseinrichtung verwaltet wird, die zeigt, ob oder nicht eine Fortsetzungsanforderung für den Mehrfachsende-Informationsverteilungsdienst getätigt wurde.

**14.** Informationsverteilungsvorrichtung nach Anspruch 13, wobei:

die Dienstfortsetzungs-Verwaltungseinrichtung eine Verwaltungszustands-Rücksetzeinrichtung hat, die eingerichtet ist, den Verwaltungszustand in einen Zustand zurückzusetzen, wo keine Fortsetzungsanforderung durch das Funkendgerät für den Mehrfachsende-Informationsverteilungsdienst gemacht wurde.

**15.** Informationsverteilungsvorrichtung nach Anspruch 14, wobei:

die Verwaltungszustands-Rücksetzeinrichtung den Rücksetzbetrieb jede vorher festgelegte Periode durchführt.

**16.** Funkendgerät (10), welches eingerichtet ist, einen Mehrfachsende-Informationsverteilungsdienst in einem IP-Netzwerk von einer Informationsverteilungsvorrichtung über einen Funkabschnitt zu empfangen, wobei das Funkendgerät umfasst:

eine Dienstfortsetzungs-Anforderungseinrichtung, die eingerichtet ist, ein Dienstfortsetzungs-Anforderungssignal, um Bereitstellung des Mehrfachsende-Informationsverteilungsdiensts anzufordern, zu der Informationsverteilungsvorrichtung zu übertragen, wobei das Dienstfortsetzungs-Anforderungssignal eine Nachricht umfasst, wobei das Nichtvorhandensein von Übertragung der Nachricht zu einer Beendigung des Mehrfachsende-Informationsverteilungsdiensts führen würde; und
**gekennzeichnet durch** eine Fortsetzungsanforderungs-Steuereinrichtung, die eingerichtet ist, die Dienstfortsetzungs-Anforderungseinrichtung zu steuern, um zu veranlassen, dass sie das Dienstfortsetzungs-Anforderungssignal zur Informationsverteilungsvorrichtung überträgt, wenn die Information, die zeigt, ob oder nicht Fortsetzungsanforderung **durch** das Funkendgerät für den Mehrfachsende-Informationsverteilungsdienst getätigt wurde, welche über die Informationsverteilungsvorrichtung übertragen wurde, welche verwaltet, ob oder nicht die Dienstfortsetzungs-Anforderung **durch** das Funkendgerät für den Mehrfachsende-Informationsverteilungsdienst gemacht wurde, einen Zustand zeigt, dass die Anforderung nicht getätigt wurde.

**17.** Funkendgerät nach Anspruch 16, welches eine Rückübertragungs-Steuereinrichtung umfasst, die eingerichtet ist, die Dienstfortsetzungs-Anforderungseinrichtung zu steuern, so dass die Dienstfortsetzungs-Anforderungseinrichtung das Dienstfortsetzungs-Anforderungssignal zur Informationsverteilungsvorrichtung zurück überträgt, wenn die Information, die zeigt, ob oder nicht Dienstfortsetzungs-Anforderung durch das Funkendgerät für den Mehrfachsende-Informationsverteilungsdienst getätigt wurde, nicht in einen Zustand geändert wurde, dass die Anforderung innerhalb einer vorher festgelegten Zeit getätigt wurde, nachdem der Dienstfortsetzungs-Anforderungseinrichtung das Dienstfortsetzungs-Anforderungssignal übertragen hat.

**Revendications**

1. Système fournissant un service de multidiffusion dans un réseau IP pour effectuer un service de distribution d'informations en multidiffusion vers un terminal radio (10) présent à l'intérieur d'une zone de service par l'intermédiaire d'une section radio à partir d'un appareil de distribution d'informations (20), où :

   ledit terminal radio a des moyens de demande de continuation de service adaptés pour transmettre audit appareil de distribution d'informations un signal de demande de continuation de service pour demander la continuation du service de distribution d'informations en multidiffusion, ledit signal de demande de continuation de service comprenant un message où l'absence de transmission dudit message conduirait à une cessation du service de distribution d'informations en multidiffusion ;
   ledit appareil de distribution d'informations a des moyens de gestion de continuation de service (24) adaptés pour gérer si la demande susmentionnée pour la continuation du service provenant du terminal radio pour le service de distribution d'informations en multidiffusion a été faite ou pas ; et
   **caractérisé en ce que** ledit appareil de distribution d'informations est adapté pour transmettre audit terminal radio des informations gérées par les moyens de gestion de continuation de service indiquant si la demande de continuation pour le service de distribution d'informations en multidiffusion a été faite ou pas.

2. Système fournissant un service de multidiffusion tel que revendiqué dans la revendication 1, où :

   lesdits moyens de gestion de service ont des moyens de réinitialisation d'état de gestion adaptés pour réinitialiser un état de gestion de ceux-ci en un état dans lequel aucune demande de continuation de service pour le service de distribution d'informations en multidiffusion provenant du terminal radio n'a été faite.

3. Système fournissant un service de multidiffusion tel que revendiqué dans la revendication 2, où :

   lesdits moyens de réinitialisation d'état de gestion effectuent une opération de réinitialisation pour l'état de gestion à chaque période prédéterminée.

4. Système fournissant un service de multidiffusion tel que revendiqué dans la revendication 2 ou 3, où :

   ledit terminal radio a des moyens de contrôle de demande de continuation adaptés pour effectuer un contrôle de telle manière que, lorsque les informations indiquant si une demande de continuation pour le service de distribution d'informations en multidiffusion a été faite ou pas sont transmises à partir de l'appareil de distribution d'informations indiquant un état dans lequel la demande n'a pas été faite, les moyens de demande de continuation de service soient adaptés pour transmettre le signal de demande de continuation de service à l'appareil de distribution d'informations.

5. Système fournissant un service de multidiffusion tel que revendiqué dans la revendication 4, où :

   lesdits moyens de contrôle de demande de continuation sont adaptés pour contrôler lesdits moyens de demande de continuation de service de manière à ce que le signal de demande de continuation de service soit transmis après qu'une première période aléatoire se soit écoulée depuis que les informations indiquant l'état dans lequel aucune demande de continuation n'a été faite pour le service de distribution d'informations en multidiffusion ont été reçues à partir de l'appareil de distribution d'informations.

6. Système fournissant un service de multidiffusion tel que revendiqué dans la revendication 4 ou 5, où :

   ledit terminal radio a des moyens de contrôle de retransmission adaptés pour effectuer un contrôle de telle manière que lesdits moyens de demande de continuation de service retransmettent le signal de demande de continuation de service audit appareil de distribution d'informations lorsque les informations indiquant si une demande de continuation a été faite ou pas pour le service de distribution d'informations en multidiffusion n'ont pas été changées en informations indiquant que la demande a été faite au cours d'une période prédéterminée après que les moyens de demande de continuation de service aient transmis le signal de demande de continuation de service.

**7.** Système fournissant un service de multidiffusion tel que revendiqué dans la revendication 6, où :

lesdits moyens de contrôle de retransmission sont adaptés pour contrôler lesdits moyens de demande de continuation de service de manière à ce que le signal de demande de continuation de service soit de nouveau transmis après qu'une seconde période aléatoire se soit écoulée après que la période prédéterminée se soit écoulée depuis que lesdits moyens de demande de continuation de service ont transmis le signal de demande de continuation de service.

**8.** Système fournissant un service de multidiffusion tel que revendiqué dans la revendication 6 ou 7, où :

un réglage est fait de telle manière à ce qu'une période prise depuis que les moyens de réinitialisation d'état de gestion susmentionnés ont réinitialisé l'état de gestion des moyens de gestion de demande de service en un état dans lequel aucune demande de continuation de service pour le service de distribution d'informations en multidiffusion n'a été effectuée, jusqu'à ce que les moyens de demande de continuation de service susmentionnés retransmettent le signal de demande de continuation de service, soit plus courte qu'une période prise depuis que l'état de gestion susmentionné a été réinitialisé à l'état dans lequel la continuation pour un service n'a pas été faite à partir du terminal radio pour le service de distribution d'informations en multidiffusion jusqu'à ce que la réinitialisation soit faite successivement.

**9.** Système fournissant un service de multidiffusion tel que revendiqué dans une quelconque des revendications de 1 à 8, où :

lesdits moyens de gestion de continuation de service sont adaptés pour gérer si une demande de continuation a été faite ou pas pour le service de distribution d'informations en multidiffusion en utilisant un repère qui est fait pour être ALLUME lorsque le signal de demande de continuation de service est reçu en provenance du terminal radio.

**10.** Méthode fournissant un service de multidiffusion pour un réseau IP, où :

lorsqu'un appareil de distribution d'informations (20) effectue un service de distribution d'informations en multidiffusion vers un terminal radio (10) présent à l'intérieur d'une zone de service par l'intermédiaire d'une section radio,
la méthode **caractérisée en ce que** ledit appareil de distribution d'informations gère si une demande de continuation de service provenant du terminal radio pour le service de distribution d'informations en multidiffusion a été faite ou pas, ladite demande de continuation de service comprenant un message où l'absence de transmission dudit message conduirait à une cessation du service de distribution d'informations en multidiffusion, et ledit appareil de distribution d'informations transmet également les informations ainsi gérées indiquant si la demande de continuation pour la gestion du service de distribution d'informations en multidiffusion a été faite ou pas vers les terminaux radio, et
ledit terminal radio transmet un signal de demande de continuation de service audit appareil de distribution d'informations lorsque les informations transmises à partir de l'appareil de distribution d'informations indiquant si une demande de continuation de service a été faite ou pas par ledit terminal radio pour le service de distribution d'informations en multidiffusion indiquent un état dans lequel la demande n'a pas été faite.

**11.** Méthode fournissant un service de multidiffusion telle que revendiquée dans la revendication 10, où :

l'état de gestion si une demande de continuation a été faite ou pas pour le service de distribution d'informations en multidiffusion à partir du terminal radio est réinitialisé en un état dans lequel aucune demande de continuation pour le service de distribution d'informations en multidiffusion n'a été faite à partir du terminal radio, de manière périodique.

**12.** Méthode fournissant un service de multidiffusion telle que revendiquée dans la revendication 10 ou 11, où :

lorsque les informations indiquant si une demande de continuation a été faite ou pas pour le service de distribution d'informations en multidiffusion ne sont pas changées en un état dans lequel la demande a été faite au cours d'une période prédéterminée après que le terminal radio ait transmis le signal de demande de continuation de service, le signal de demande de continuation de service est de nouveau transmis à l'appareil de distribution d'informations.

13. Appareil de distribution d'informations (20) adapté pour effectuer un service de distribution d'informations en multidiffusion dans un réseau IP par l'intermédiaire d'une section radio vers un terminal radio (10) présent à l'intérieur d'une zone de service, l'appareil de distribution d'informations comprenant :

des moyens de gestion de continuation de service adaptés pour gérer si une demande de continuation de service a été faite ou pas par le terminal radio pour le service de distribution d'informations en multidiffusion, ladite demande de continuation de service comprenant un message où l'absence de transmission dudit message conduirait à une cessation du service de distribution d'informations en multidiffusion,
**caractérisé en ce que** ledit appareil de distribution d'informations (20) est adapté pour transmettre au terminal radio des informations gérées par lesdits moyens de gestion de continuation de service indiquant si une demande de continuation pour le service de distribution d'informations en multidiffusion a été faite ou pas.

14. Appareil de distribution d'informations tel que revendiqué dans la revendication 13, où :

les moyens de gestion de continuation de service ont des moyens de réinitialisation d'état de gestion adaptés pour réinitialiser l'état de gestion en un état dans lequel aucune demande de continuation de service n'a été faite par le terminal radio pour le service de distribution d'informations en multidiffusion.

15. Appareil de distribution d'informations tel que revendiqué dans la revendication 14, où :

lesdits moyens de réinitialisation d'état de gestion effectuent l'opération de réinitialisation à chaque période prédéterminée.

16. Terminal radio (10) adapté pour recevoir un service de distribution d'informations en multidiffusion dans un réseau IP à partir d'un appareil de distribution d'informations par l'intermédiaire d'une section radio, le terminal radio comprenant :

des moyens de demande de continuation de service adaptés pour transmettre un signal de demande de continuation de service pour demander la fourniture du service de distribution d'informations en multidiffusion à l'appareil de distribution d'informations, ledit signal de demande de continuation de service comprenant un message où l'absence de transmission dudit message conduirait à une cessation du service de distribution d'informations en multidiffusion ; et
**caractérisé par** des moyens de contrôle de demande de continuation adaptés pour contrôler lesdits moyens de demande de continuation de service afin de faire en sorte qu'ils transmettent le signal de demande de continuation de service à l'appareil de distribution d'informations lorsque des informations indiquant si une demande de continuation de service a été faite ou pas par le terminal radio pour le service de distribution d'informations en multidiffusion, transmises par l'appareil de distribution d'informations qui gère si la demande de continuation de service a été faite ou pas par le terminal radio pour le service de distribution d'informations en multidiffusion, indiquent un état dans lequel la demande n'a pas été faite.

17. Terminal radio tel que revendiqué dans la revendication 16, comprenant des moyens de contrôle de retransmission adaptés pour contrôler les moyens de demande de continuation de service de manière à ce que les moyens de demande de continuation de service retransmettent le signal de demande de continuation de service à l'appareil de distribution d'informations, lorsque les informations indiquant si une demande de continuation de service a été faite ou pas par le terminal radio pour le service de distribution d'informations en multidiffusion n'ont pas été changées en un état dans lequel la demande a été faite au cours d'une période prédéterminée après que les moyens de demande de continuation de service aient transmis le signal de demande de continuation de service.

# FIG.1

RADIO
TERMINAL

RADIO
BASE STATION

QUERY

RANDOM
TIME
ELAPSES

REQUEST FOR
SERVICE CONTINUATION

QUERY

RANDOM
TIME
ELAPSES

REQUEST FOR
SERVICE
CONTINUATION

TIME OF
WAITING FOR
REQUEST FOR
SERVICE
CONTINUATION

SERVICE
TERMINATION

# FIG.2

251  252  253

A  B  C

230

220

SERVICE A,B,C

210(1)  210(2)  210(3)

ES(LAN)

NW

EP 1 185 125 B1

# FIG.3

250

A

PUBLIC
NETWORK

NW

220

A    A    A

210(1)    210(3)

210(2)    ES

# FIG.4

251    252    253

A    B    C

PUBLIC
NETWORK

NW

SERVICE
C    220

SERVICE
B

SERVICE
A

210(1)

210(2)

210(3)

ES

# FIG.5

# FIG.6

EP 1 185 125 B1

# FIG.7

| ITEM | TYPE | VALUE |
|---|---|---|
| RESET STATE | RESET STATE | ON/OFF |
| FLAG FOR DISTRIBUTION SERVICE | #1 | ON/OFF |
| | #2 | ON/OFF |
| | #3 | ON/OFF |
| | #4 | ON/OFF |

# FIG.8

ON (0)

OFF (1)

RESET OF FLAG

TRANSMISSION
OF MANAGEMENT
TABLE IN ON STATE

# FIG.9

```
                    ┌──────────────┐
                    │    START     │
                    └──────┬───────┘
                           │
                           ▼
              ┌────────────────────────┐
              │    RESET FLAG STATE     │──── S1
              └────────────┬───────────┘
                           │
        ┌──────────────────┤
        │                  ▼                        S4
        │            ╱ S2 ╲                    ┌──────────────┐
        │          ╱ SERVICE ╲     YES         │              │
        │        ◄  CONTINUE   ►──────────────►│ TURN ON FLAG │
        │          ╲REQUEST   ╱                └──────┬───────┘
        │            ╲RECEIVED?╱                      │
        │                │ NO                         │
        │                │◄───────────────────────────┘
        │                ▼          S3
        │            ╱      ╲
        │  NO      ╱AT TIMING ╲
        └────────◄ OF RESETTING►
                   ╲FLAG STATE?╱
                     ╲       ╱
                        │ YES
                        ▼          S5
                    ╱       ╲
       YES        ╱  FLAG    ╲
     ┌──────────◄  TURNED     ►
     │            ╲   ON?    ╱
     │              ╲      ╱
     │                │ NO
     │                ▼
     │      ┌──────────────────────┐
     │      │  TERMINATE RELEVANT  │──── S6
     │      │   MULTICAST SERVICE  │
     │      └──────────┬───────────┘
     │                 │
     └─────────────────┤
                       ▼
                ┌─────────────┐
                │     END     │
                └─────────────┘
```

# FIG.10

# FIG.11

RADIO
TERMINAL 10

RADIO
BASE STATION 20

① RESET FLAG STATE

R1 TIME
ELAPSE

② SERVICE CONTINUE REQUEST
SIGNAL

FLAG STATE
RESET PERIOD
=
MAXIMUM WAITING
TIME FOR SERVICE
CONTINUE REQUEST
SIGNAL

Twait
TIME
ELAPSE

③ RECEIVED FLAG ON

④ RESET FLAG STATE

# FIG.12

RADIO
TERMINAL

RADIO
BASE STATION

① RESET FLAG STATE

R1 TIME
ELAPSE

FLAG STATE
RESET PERIOD

② SERVICE CONTINUE REQUEST
SIGNAL        ✕

$=$

MAXIMUM WAITING
TIME FOR SERVICE
CONTINUE REQUEST
SIGNAL

Twait
TIME
ELAPSE

R2 TIME
ELAPSE

③ SERVICE CONTINUE REQUEST
SIGANAL

④ RECEIVED SIGNAL ON

⑤ RESET FLAG STATE

EP 1 185 125 B1

# FIG.13

| MULTICAST GROUP ADDRESS | TRANSMISSION CHANNEL | INFORMATION CHANNEL NUMBER |
|---|---|---|
| 239.111.102.45 | #1 | 1 |
| 226.208.121.23 | #2 | 2 |
| 231.131.172.10 | #3 | 3 |
| . . . | . . . | . . . |
| . . . | . . . | . . . |

42

# FIG.14

```
                        ┌─────────┐
                        │  START  │
                        └────┬────┘
                             │              S31
                    ◇────────┴─────────◇  NO
                    ON MULTICAST SERVICE ──────────────┐
                    ◇──────────────────◇               │
                             │ YES                      │
        ┌──────────────────→ │                          │
        │                    │            S32           │
        │           ◇────────┴─────────◇                │
        │  NO       MULTI CAST INFORMATION              │
        └───────────    CHANNEL TABLE                   │
                    TRANSMISSION TIMING?                 │
                    ◇──────────────────◇                │
                             │ YES                       │
                    ┌────────┴─────────┐                 │
                    │ TRANSMIT MULTICAST│    S33          │
                    │INFORMATION CHANNEL TABLE│           │
                    └────────┬─────────┘                  │
                             │              S34           │
                    ◇────────┴─────────◇                 │
        NO          MULTICAST  SERVICE                    │
   ┌────────────    REQUEST SIGNAL RECEIVED? ────────────┘
   │                ◇──────────────────◇
   │                         │ YES
   │                         │            S35
   │               ◇─────────┴────────◇
   │   YES         REQUESTED MULTICAST
   ├───────────    GROUP IS ON SERVICE?
   │               ◇──────────────────◇
   │                         │ NO
   │               ┌─────────┴────────┐
   │               │UPDATE MULTICAST INFORMATION│  S36
   │               │  CHANNEL TABLE   │
   │               └─────────┬────────┘
   │               ┌─────────┴────────┐
   │               │START TRANSMISSION OF MULTICAST│ S37
   │               │DATA CORRESPONDING TO NEW      │
   │               │MULTICAST INFORMATION CHANNEL  │
   │               └─────────┬────────┘
   │                         │
   └─────────────────────────┤
                             │
                        ┌────┴────┐
                        │   END   │
                        └─────────┘
```

# FIG.15

```
                    ┌──────────┐
                    │  START   │
                    └────┬─────┘
                         │
                ┌────────▼─────────┐
                │RECEIVE PERCH CANNEL│ ── S41
                └────────┬─────────┘
                         │        S42
                    ◇────▼─────◇
                   RECEPTION OF        NO
                MULTICAST SERVICE IS ──────►
                    REQUIRED?
                    ◇────┬─────◇
                      YES │   S43
                    ◇────▼─────◇
              NO   MULTICAST
        ◄──────── SERVICE IS ON
                   RECEPTION?
                    ◇──────────◇
                      YES
```

- RECEIVE PERCH CANNEL — S41
- RECEPTION OF MULTICAST SERVICE IS REQUIRED? — S42
- MULTICAST SERVICE IS ON RECEPTION? — S43
- RADIO BASE STATION IS PERFORMING MULTICAST SERVICE? — S44
- MULTICAST INFORMATION CHANNEL TABLE RECEPTION TIMING? — S45
- RECEIVE MULTICAST INFORMATION CHANNEL TABLE — S46
- MULTICAST INFORMATION CHANNEL REQUIRED TO RECEIVE IS ON SERVICE? — S47
- RECEIVE INDICATED CHANNEL — S48
- TRANSMIT SERVICE REQUEST SIGNAL FOR REQUIRED MULTICAST INFORMATION CHANNEL — S49

END

# FIG.16

PERCH CHANNEL

① INDICATE TRANSMISSION
CHANNEL

MULTICAST INFORMATION
CHANNEL TABLE

② INDICATE TRANSMISSION
CHANNEL

MULTICAST DATA
CORRESPONDING TO
EACH MULTICAST
INFORMATION CHANNEL

# FIG.17

```
                    ┌─────────┐
                    │  START  │
                    └────┬────┘
                         │
              ┌──────────┤                    S51
              │          ▼
   ┌─NO───◄─────────────────────────►
   │          SERVICE CONTINUE
   │        CHECK SIGNAL TRANSMISSION
   │              TIMING?
   │                    │
   │                   YES
   │                    ▼
   │        ┌─────────────────────────┐    S52
   │        │ TRANSMIT SERVICE CONTINUE│
   │        │      CHECK SIGNAL        │
   │        └────────────┬────────────┘
   │                     ▼
   │        ┌─────────────────────────┐    S53
   │        │  START RESPONSE SIGNAL   │
   │        │      WAITING TIMER       │
   │        └────────────┬────────────┘
   │                     │
   │                     ▼               S54
   │              ◄───────────────►──NO──┐
   │                  TIME OUT?          │
   │                     │               ▼          S55
   │                    YES        ◄──────────────►──NO──┐
   │                     ▼          RECEIVE RESPONSE      │
   │   ┌──────────────────────────┐    SIGNAL?           │
   │   │  TERMINATE SERVICE OF     │S57    │              │
   │   │ MULTICAST INFORMATION     │      YES             │
   │   │ CHANNEL NOT RECEIVING     │       ▼              │
   │   │   RESPONSE SIGNAL         │  ┌──────────────────┐│
   │   └────────────┬─────────────┘  │ CONTINUE SERVICE ││
   │                │            S58  │ OF MULTICAST     ││
   │                ▼                 │ INFORMATION      ││
   │   ┌──────────────────────────┐  │ CHANNEL RECEIVING││
   │   │ UPDATE MULTICAST          │  │ RESPONSE SIGNAL  ││
   │   │ INFORMATION CHANNEL TABLE │  └────────┬─────────┘│
   │   └────────────┬─────────────┘           └──────────┘
   │                ▼                              S56
   │           ┌─────────┐
   │           │   END   │
   │           └─────────┘
```

46

# FIG.18

| MULTICAST GROUP ADDRESS | TRANSMISSION CHANNEL | INFORMATION CHANNEL NUMBER | SERVICE CONTINUE CHECK SIGNAL |
|---|---|---|---|
| 239.111.102.45 | #1 | 1 | 1(=TRANSMISSION) |
| 226.208.121.23 | #2 | 2 | 0(=UN-TRANSMISSION) |
| 231.131.172.10 | #3 | 3 | 0(=UN-TRANSMISSION) |
| · · · | · · · | · · · | · · · |
| · · · | · · · | · · · | · · · |

EP 1 185 125 B1

# FIG.19

START

↓

S61

SERVICE CHECK
SIGNAL RECEIVED? —— NO ——→

YES ↓

S62

TO CONTINUE RECEPTION ? —— NO ——→

YES ↓

START RANDOM TIMER  S63

↓

S64

NO ←—— TIME OUT?

YES ↓

TRANSMIT RESPONSE SIGNAL  S65

↓

END

48

# FIG.20

```
        ┌─────────────┐
        │    START    │
        └─────────────┘
               │
               ▼
   ┌──────────────────────────┐
   │ TERMINATE  RECEPTION OF  │─── S71
   │ MULTICAST DATA           │
   └──────────────────────────┘
               │
               ▼
   ┌──────────────────────────┐
   │ TRANSMIT SERVICE RECEPTI ON │─── S72
   │ TERMINATE SIGNAL         │
   └──────────────────────────┘
               │
               ▼
        ┌─────────────┐
        │    END      │
        └─────────────┘
```

# FIG.21

TO ROOT NETWORK

ANTENNA

ANTENNA

110

120

114 ~ 121

RADIO BASE STATION

RADIO TERMINAL

NETWORK INTERFACE

RADIO LINK CONTROL DEVICE

TRANSMITTING RECEIVING UNIT

TRANSMITTING RECEIVING UNIT

RADIO LINK CONTROL DEVICE

USER INTERFACE

INPUT/ OUTPUT DEVICE

111

112

113

122

123

124

125

MULTICAST CONTROL DEVICE

115

MULTICAST CONTROL DEVICE

126

HANDOFF CONTROL DEVICE

116

HANDOFF CONTROL DEVICE

127

EP 1 185 125 B1

# FIG.23

START

RADIO TERMINAL ON RECEPTION OF MULTICAST DATA — S81

RADIO TERMINAL MOVES RADIO ZONES — S82

RADIO TERMINAL REGARDS AS HANDOFF OPPORTUNITY TIME OF DETECTING THAT ELECTRIC FIELD INTENSITY OF PERCH CHANNEL OF RADIO BASE STATION ON MOVEMENT DESTINATION BECOMES LARGER THAN THAT OF MOVEMENT ORIGIN BY PREDETERMINED VALUE — S83

RADIO TERMINAL TRANSMITS TO RADIO BASE STATION ON MOVEMENT DESTINATION SWITCHING REQUEST SIGNAL — S84

RADIO BASE STATION ON MOVEMENT DESTINATION STARTS DISTRIBUTION OF MULTICAST DATA ACCORDING TO THE SWITCHING REQUEST SIGNAL — S85

RADIO BASE STATION ON MOVEMENT DESTINATION TRANSMITS TO RADIO TERMINAL TRANSMITTING THE SWITCHING REQUEST SIGNAL SWITCHING RESPONSE SIGNAL — S86

RADIO TERMINAL SWITCHES RADIO CHANNEL ACCORDING TO THE SWITCHING RESPONSE SIGNAL, SO AS TO START RECEPTION OF MULTICAST DATA FROM RADIO BASE STATION ON MOVEMENT DESTINATION — S87

END

# FIG.24

(a)

(b)

# FIG.25

| RADIO BASE STATION NUMBER | PROGRAM TITLE | RADIO CHANNEL NUMBER | DISTRIBUTION CHECK 1 | DISTRIBUTION CHECK 2 |
|---|---|---|---|---|
| 1 | 224.0.100.51 | 5 | 0 | 1 |
| | 231.21.78.93 | 13 | 0 | |
| | 228.250.141.4 | 8 | 0 | |
| 2 | 229.31.7.85 | 9 | 1 | 0 |
| . . . | . . . | . . . | . . . | . . . |
| 6 | 226.86.25.2 | 7 | 0 | 0 |
| 7 | 230.49.135.107 | 2 | 0 | 0 |
| | 239.200.3.246 | 4 | 0 | |

# FIG.26

```
                    ┌─────────────┐
                    │    START    │
                    └──────┬──────┘
                           │
      ┌────────────────────────────────────┐
      │  RADIO TERMINAL ON RECEPTION OF     │──── S91
      │  MULTICAST DATA A, AND PERIODICALLY │
      │ RECEIVING MULTICAST MANAGEMENT TABLE│
      └────────────────────┬───────────────┘
                           │
      ┌────────────────────────────────────┐
      │  RADIO TERMINAL MOVES RADIO ZONES   │──── S92
      └────────────────────┬───────────────┘
                           │
      ┌────────────────────────────────────┐
      │       RADIO TERMINAL REGARDS AS     │
      │        HANDOFF OPPORTUNITY TIME     │
      │         OF DETECTING THAT ELECTRIC  │
      │      FIELD INTENSITY OF PERCH CHANNEL│──── S93
      │        OF RADIO BASE STATION ON     │
      │      MOVEMENT DESTINATION BECOMES   │
      │       LARGER THAN THAT OF MOVEMENT  │
      │       ORIGIN BY PREDETERMINED VALUE │
      └────────────────────┬───────────────┘
                           │        S94
                        ◇◇◇◇◇◇◇◇◇◇◇
                RADIO TERMINAL DETERMINES
             FROM LATEST MULTICAST MANAGEMENT
             TABLE WHETHER OR NOT MULTICAST DATA ───── YES
                A IS DISTRIBUTED IN RADIO ZONE
                   OF MOVEMENT DESTINATION
                        ◇◇◇◇◇◇◇◇◇◇◇
                           │ NO
```

RADIO TERMINAL DETERMINES FROM LATEST MULTICAST MANAGEMENT TABLE WHETHER OR NOT MULTICAST DATA A IS DISTRIBUTED IN RADIO ZONE OF MOVEMENT DESTINATION — **S94**

**NO** branch:

RADIO TERMINAL TRANSMITS TO RADIO BASE STATION ON MOVEMENT DESTINATION SWITCHING REQUEST SIGNAL — **S95**

RADIO BASE STATION ON MOVEMENT DESTINATION STARTS DISTRIBUTION OF MULTICAST DATA ACCORDING TO THE SWITCHING REQUEST SIGNAL — **S96**

RADIO BASE STATION ON MOVEMENT DESTIINATION TRANSMITS TO RADIO TERMINAL TRANSMITTING THE SWITCHING REQUEST SIGNAL SWITCHING RESPONSE SIGNAL — **S97**

RADIO TERMINAL SWITCHES RADIO CHANNEL ACCORDING TO THE SWITCHING RESPONSE SIGNAL, SO AS TO START RECEPTION OF MULTICAST DATA FROM RADIO BASE STATION ON MOVEMENT DESTINATION — **S98**

**YES** branch:

RADIO TERMINAL SWITCHES RADIO CHANNEL ACCORDING TO MULTICAST MANAGEMENT TABLE SO AS TO START RECEPTION OF MULTICAST DATA A FROM RADIO BASE STATION ON MOVEMENT DESTINATION — **S99**

```
                    ┌─────────────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0951198 A

**Non-patent literature cited in the description**

- **FENNER W.** Internet Group Management Protocol, Version 2. *IETF Request for Comments,* 01 November 1997, vol. XX, XX (2236), 1-24